(19) Europäisches Patentamt / European Patent Office / Office européen des brevets

(11) **EP 4 446 347 A1**

(12) **EUROPEAN PATENT APPLICATION**
published in accordance with Art. 153(4) EPC

(43) Date of publication:
**16.10.2024   Bulletin 2024/42**

(21) Application number: **22904254.4**

(22) Date of filing: **07.12.2022**

(51) International Patent Classification (IPC):
*C08F 2/18* (2006.01)          *B01J 13/14* (2006.01)
*C08F 257/00* (2006.01)

(52) Cooperative Patent Classification (CPC):
**B01J 13/14; C08F 2/18; C08F 257/00**

(86) International application number:
**PCT/JP2022/045058**

(87) International publication number:
**WO 2023/106326 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **10.12.2021   JP 2021201039**

(71) Applicant: **Zeon Corporation
Tokyo 100-8246 (JP)**

(72) Inventor: **MATSUO Keisuke
Tokyo 141-6029 (JP)**

(74) Representative: **Kraus & Lederer PartGmbB
Thomas-Wimmer-Ring 15
80539 München (DE)**

(54)   **STATOR AND ELECTRICAL ROTATING MACHINE**

(57)   To provide hollow particles configured to improve adhesion to resin. Hollow particles which comprise a shell containing a resin and a hollow portion surrounded by the shell, wherein, as the resin, the shell contains a polymer which contains 60% by mass or more of crosslinkable monomer units; wherein the hollow particles have amino groups on a surface thereof; and wherein in an amine amount per unit area of the hollow particles, which is obtained by the following formula (A) using an amine value of the hollow particles and a specific surface area of the hollow particles, is 5.00 $\mu$mol/m$^2$ or more:
Amine amount ($\mu$mol/m$^2$) = Amine value ($\mu$mol/g)/Specific surface area (m$^2$/g) Formula (A).

EP 4 446 347 A1

**Description**

Technical Field

The disclosure relates to hollow particles, a method for producing the hollow particles, and a resin composition comprising the hollow particles.

Background

Hollow particles (hollow resin particles) have a hollow in their interior. Accordingly, they are added and used in resins, coating materials, various kinds of molded bodies and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.

To enhance the effects of various kinds of compositions and molded bodies containing hollow particles, such as weight reduction, heat insulation and a decrease in permittivity, it is desirable that hollow particles can retain a high void ratio even when they are mixed and kneaded with other materials and even when the mixture is molded after the mixing and kneading.

For example, as hollow particles that can suppress deformation and keep their void ratio, Patent Documents 1 and 2 disclose such hollow particles, that the shell contains a polymer obtained by polymerizing a reactive monomer containing a radically polymerizable functional group and a crosslinkable functional group such as an epoxy group, and then crosslinking them by a crosslinking agent such as a polyamine-based compound.

Citation List

[Patent Documents]

Patent Document 1: International Publication No. WO2019/177006
Patent Document 2: Japanese Patent Application Laid-Open (JP-A) No. 2006-89648

Summary of Invention

Technical Problem

However, the resin composition obtained by incorporating conventional hollow particles in a resin has the following problem: compared to a resin composition not containing hollow particles, physical properties relating to external force strength, such as tensile strength and flexural strength, deteriorate. Also, when the resin composition obtained by incorporating conventional hollow particles in a resin is used in the insulation or encapsulation resin of electronic parts such as an electronic circuit board, there are the following problems, for example: sufficient copper foil peel strength is not obtained due to low adhesion between a copper foil and a resin layer containing the hollow particles, and a failure is easily caused by moisture absorption in a reliability test such as a pressure cooker test (PCT). These problems are thought to arise from insufficient adhesion between the hollow particles and resin in the resin composition.

An object of the present disclosure is to provide hollow particles configured to improve adhesion to resin, a method for producing the hollow particles, and a resin composition containing the hollow particles.

Solution to Problem

The present inventor found that when the amine amount per unit area on the surface of hollow particles is equal to or more than a specific amount, adhesion to resin can be improved.

The present disclosure provides hollow particles which comprise a shell containing a resin and a hollow portion surrounded by the shell,

wherein, as the resin, the shell contains a polymer which contains 60% by mass or more of crosslinkable monomer units;
wherein the hollow particles have amino groups on a surface thereof; and
wherein an amine amount per unit area of the hollow particles, which is obtained by the following formula (A) using an amine value of the hollow particles and a specific surface area of the hollow particles, is 5.00 $\mu$mol/m$^2$ or more:

$$\text{Amine amount } (\mu\text{mol/m}^2) = \text{Amine value } (\mu\text{mol/g}) \text{ /Specific surface area } (\text{m}^2/\text{g}) \qquad \text{Formula (A)}.$$

In the hollow particles of the present disclosure, the polymer preferably contains amino group-containing monomer units, and the amino group-containing monomer units are preferably derived from a monomer for amino group introduction, which contains a radically polymerizable group and an amino group.

In the hollow particles of the present disclosure, the amino groups on the surface of the hollow particles are preferably the amino groups contained in the amino group-containing monomer units.

In the hollow particles of the present disclosure, with respect to 100% by mass of all monomer units contained in the polymer, a content of the amino group-containing monomer units is preferably 2% by mass or more and 40% by mass or less.

In the hollow particles of the present disclosure, with respect to 100% by mass of all monomer units contained in the polymer, a content of hydrocarbon monomer units may be more than 50% by mass.

Also, in the hollow particles of the present disclosure, with respect to 100% by mass of all monomer units contained in the polymer, a content of acrylic monomer units may be more than 50% by mass.

In the hollow particles of the present disclosure, a void ratio is preferably 50% or more.

The present disclosure provides a method for producing the hollow particles of the present disclosure, the method comprising:

preparing a mixture liquid containing a monomer for skeleton formation, a hydrophobic solvent, a polymerization initiator, a dispersion stabilizer and an aqueous medium,

suspending the mixture liquid to prepare a suspension in which droplets of a monomer composition containing the monomer for skeleton formation, the hydrophobic solvent and the polymerization initiator are dispersed in the aqueous medium, and

preparing a precursor composition containing precursor particles by subjecting the suspension to a polymerization reaction and adding a monomer for amino group introduction, which contains a radically polymerizable group and an amino group, to further continue the polymerization reaction when a polymerization conversion rate of the monomer for skeleton formation reaches 1% by mass or more and 99% by mass or less, wherein the precursor particles comprise a shell and a hollow portion surrounded by the shell, and the precursor particles include the hydrophobic solvent in the hollow portion, and wherein the shell of the precursor particles contains a polymer of the monomer for skeleton formation and the monomer for amino group introduction, and the shell has amino groups on an outside surface thereof,

wherein a solubility of the monomer for amino group introduction in water at 20°C is larger than that of the hydrophobic solvent and is from 0.5 g/L to 1000 g/L, and

wherein the monomer for skeleton formation contains a crosslinkable monomer, and a content of the crosslinkable monomer is 60% by mass or more with respect to a total (100% by mass) of the monomer for skeleton formation and the monomer for amino group introduction.

The present disclosure provides a resin composition comprising the hollow particles of the present disclosure and a binder resin containing a functional group reactive with an amino group.

Advantageous Effects of Invention

According to the present disclosure as described above, hollow particles configured to improve adhesion to resin, a method for producing the hollow particles, and a resin composition containing the hollow particles are provided.

Brief Description of Drawing

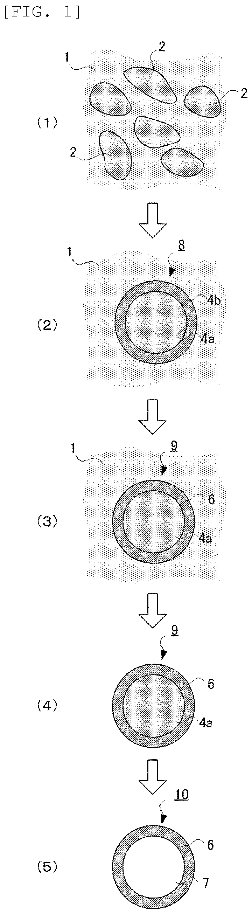

[FIG. 1] A diagram illustrating an example of the method for producing the hollow particles of the present disclosure.

Description of Embodiments

In the present disclosure, "to" which shows a numerical range is used to describe a range in which the numerical values described before and after "to" indicate the lower limit value and the upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the term "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer is a polymerizable monomer which forms crosslinking in resin by polymerization reaction.

Also in the present disclosure, "excellent in dielectric property" means low relative permittivity and dielectric dissipation factor, and lower relative permittivity and dielectric dissipation factor means better dielectric property.

The hollow particles of the present disclosure are hollow particles which comprise a shell containing a resin and a hollow portion surrounded by the shell,

wherein, as the resin, the shell contains a polymer which contains 60% by mass or more of crosslinkable monomer units;
wherein the hollow particles have amino groups on a surface thereof; and
wherein an amine amount per unit area of the hollow particles, which is obtained by the below-described formula (A) using an amine value of the hollow particles and a specific surface area of the hollow particles, is 5.00 $\mu$mol/m$^2$ or more.

Due to the use of the hollow particles of the present disclosure in combination with the resin containing a functional group reactive with an amino group, a crosslink can be formed by the reaction of the amino group on the surface of the hollow particles with the functional group of the resin, and the interface between the resin and the hollow particles can be excellent in adhesion, accordingly. The reaction of the amino group of the hollow particles with the functional group of the resin is only required to be a covalent bond-forming reaction.

When the hollow particles of the present disclosure having the amino group on the surface are dispersed in the resin containing the functional group that is reactive with the amino group, due to close polarity between the particles and the resin and high affinity between them, the hollow particles obtain good dispersibility. In a molded body containing hollow particles, if the hollow particles aggregate, pressure is likely to be applied to a part where the hollow particles aggregate at the time of pressuring the molded body, and the hollow particles are likely to collapse, accordingly. In the molded body obtained by adding the hollow particles of the present disclosure to the resin containing the functional group, however, the hollow particles are likely to be uniformly dispersed, and the aggregation of the hollow particles is suppressed. Accordingly, pressure is likely to be uniformly applied when pressuring the molded body. Accordingly, the pressure resistance of the hollow particles is improved, and the collapse of the hollow particles is suppressed. Also in the molded body obtained by adding the hollow particles of the present disclosure to the resin containing the functional group, since the amino group of the hollow particles is crosslinked to the functional group of the resin, there is a three-dimensional crosslinked structure in the vicinity of the particle surface. As a result, the pressure resistance of the hollow particles is improved, and the collapse of the hollow particles is suppressed.

The hollow particles of the present disclosure are particles which comprise a resin-containing shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. From the viewpoint of dielectric property and so on, the hollow particles of the present disclosure preferably have a solid shell.

The hollow portion of the hollow particles can be determined by, for example, SEM observation of a cross section of the particles or TEM observation of the particles as they are.

From the viewpoint of exerting excellent dielectric property, the hollow portion of the hollow particles of the present disclosure is preferably filled with gas such as air.

Hereinafter, an example of the method for producing the hollow particles of the present disclosure will be described. Then, the hollow particles of the present disclosure will be described in detail. Also, the resin composition comprising the hollow particles of the present disclosure will be described.

1. Method for producing the hollow particles

For example, the hollow particles of the present disclosure can be obtained by the hollow particle production method of the present disclosure, the method comprising:

preparing a mixture liquid containing a monomer for skeleton formation, a hydrophobic solvent, a polymerization initiator, a dispersion stabilizer and an aqueous medium,

suspending the mixture liquid to prepare a suspension in which droplets of a monomer composition containing the monomer for skeleton formation, the hydrophobic solvent and the polymerization initiator are dispersed in the aqueous medium, and

preparing a precursor composition containing precursor particles by subjecting the suspension to a polymerization reaction and adding a monomer for amino group introduction, which contains a radically polymerizable group and an amino group, to further continue the polymerization reaction when a polymerization conversion rate of the monomer for skeleton formation reaches 1% by mass or more and 99% by mass or less, wherein the precursor particles comprise a shell and a hollow portion surrounded by the shell, and the precursor particles include the hydrophobic solvent in the hollow portion, and wherein the shell of the precursor particles contains a polymer of the monomer for skeleton formation and the monomer for amino group introduction, and the shell has amino groups on an outside surface thereof,

wherein a solubility of the monomer for amino group introduction in water at 20°C is larger than that of the hydrophobic solvent and is from 0.5 g/L to 1000 g/L, and

wherein the monomer for skeleton formation contains a crosslinkable monomer, and a content of the crosslinkable monomer is 60% by mass or more with respect to a total (100% by mass) of the monomer for skeleton formation and the monomer for amino group introduction.

The production method of the present disclosure follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

When, in the basic technique, the amino group-containing monomer is preliminarily contained in the suspension, it is difficult to dispose the amino groups of the amino group-containing monomer on the outside surface of the shell, and even if the content of the amino group-containing monomer is increased, it is difficult to allow sufficient amounts of amino groups to be present on the surface of the hollow particles. Also, as the amount of the amino groups contained in the shell increases, the dielectric property of the hollow particles tends to deteriorate. Accordingly, there is a problem such that it is difficult to improve the adhesion to resin while maintaining the dielectric property of the hollow particles.

Meanwhile, in the production method of the present disclosure, the monomer for amino group introduction, which contains a radically polymerizable group and an amino group and which has appropriate water solubility, is added to the suspension during the polymerization reaction to further continue the polymerization reaction; thereby, monomer units derived from the monomer for amino group introduction can be efficiently introduced to the outside surface of the shell. In the production method of the present disclosure, it is presumed that since the monomer for amino group introduction is added during the polymerization reaction and since the monomer for amino group introduction has appropriate water solubility, the added monomer for amino group introduction can be easily disposed on the shell surface during the polymerization reaction. Also, it is presumed that since the monomer for amino group introduction has a radically polymerizable group as a polymerizable functional group and since the radically polymerizable group is highly reactive, the monomer for amino group introduction readily reacts with the unreacted monomer for skeleton formation disposed on the shell surface. In the production method of the present disclosure, accordingly, it is presumed that the monomer for amino group introduction added during the polymerization reaction is bound to the shell surface by addition-polymerization, and the amino group can be efficiently introduced to the outside surface of the shell. Even if the polymerization conversion rate of the monomer for skeleton formation when adding the monomer for amino group introduction is relatively low, the polymer composed of the monomer for skeleton formation reacts with the monomer for amino group introduction in oil droplets. It is presumed that the thus-obtained reactant has high polarity due to containing amino groups, and is likely to be present on the outermost surface of the droplets, the monomer for amino group introduction can be introduced to the surface of the shell.

By the production method of the present disclosure, as just described, the amino groups can be efficiently introduced to the surface of the hollow particles; therefore, amino groups in an amount required to obtain excellent adhesion to resin, can be imparted to the surface of the hollow particles, while minimizing the amount of the added monomer for amino group introduction. Accordingly, the content rate of the monomer units for skeleton formation can be relatively increased, and desired physical properties can be imparted to the hollow particles by adjusting the composition of the monomer for skeleton formation. For example, by using a large amount of hydrocarbon monomer as the monomer for skeleton formation, hollow particles excellent in dielectric property can be obtained.

In the production method of the present disclosure, spherical hollow particles having, in the interior thereof, a hollow portion that is clearly distinguished from the shell, are formed by adjusting the content of the crosslinkable monomer to 60% by mass or more with respect to the total (100% by mass) of the monomer for skeleton formation and the monomer for amino group introduction. The reason is presumed as follows: since the crosslinkable monomer is sufficiently contained in the polymerizable monomer used to form the shell, phase separation between the hydrophobic solvent and the components forming the shell is likely to occur in the droplets of the monomer composition dispersed in the suspension; moreover, since the shell excellent in strength is formed, the deformation of the particles is suppressed.

The method for producing the hollow particles of the present disclosure includes the steps of preparing the mixture liquid, preparing the suspension, and preparing the precursor composition. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles of the present disclosure may be a production method including the following steps.

(1) Mixture liquid preparation step
The mixture liquid preparation step includes preparing the mixture liquid containing the monomer for skeleton formation, the hydrophobic solvent, the polymerization initiator, the dispersion stabilizer and the aqueous medium.
(2) Suspension step
The suspension step includes suspending the mixture liquid to prepare the suspension in which the droplets of the monomer composition containing the monomer for skeleton formation, the hydrophobic solvent and the polymerization initiator are dispersed in the aqueous medium.
(3) Precursor composition preparation step
The precursor composition preparation step includes subjecting the suspension to a polymerization reaction to prepare the precursor composition containing the precursor particles which have the hollow portion surrounded by the shell containing the resin and which include the hydrophobic solvent in the hollow portion.
(4) Solid-liquid separation step
The solid-liquid separation step includes performing solid-liquid separation of the precursor composition to obtain the precursor particles including the hydrophobic solvent in the hollow portion.
(5) Solvent removal step
The solvent removal step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

In the above-mentioned "(3) Precursor composition preparation step" of the production method of the present disclosure, during the polymerization reaction of the suspension, the monomer for amino group introduction, which contains a radically polymerizable group and an amino group and which has appropriate water solubility, is added to further continue the polymerization reaction, thereby forming the precursor particles such that the shell contains the polymer of the monomer for skeleton formation and the monomer for amino group introduction, and the shell has amino groups on the outside surface thereof.

FIG. 1 is a schematic diagram showing an example of the method for producing the hollow particles of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the monomer for skeleton formation, the hydrophobic solvent and the polymerization initiator.

The diagram (2) of FIG. 1 is a schematic cross-sectional view showing an embodiment of the suspension in the suspension step. The suspension contains the aqueous medium 1 and droplets 8 of the monomer composition dispersed in the aqueous medium 1. The droplets 8 of the monomer composition contain the monomer for skeleton formation, the hydrophobic solvent and the polymerization initiator, and their distribution in the droplets is not uniform. The droplets 8 of the monomer composition have the following structure: phase separation occurs between a hydrophobic solvent 4a and a material 4b containing the monomer for skeleton formation and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition obtained by the precursor composition preparation step, which contains the precursor particles which include the hydrophobic solvent in the hollow portion. The precursor composition contains the aqueous medium 1 and precursor particles 9 which include the hydrophobic solvent 4a in the hollow portion and which are dispersed in the aqueous medium 1. A shell 6 forming the outer surface of the precursor particles 9 is formed by polymerization of the monomer for skeleton formation contained in the droplets 8 of the monomer composition and the monomer for amino group introduction that is added during the polymerization reaction. The precursor particles 9 contain, as the resin, the polymer of the monomer for skeleton formation and the monomer for amino group introduction.

The diagram (4) of FIG. 1 is a schematic cross-sectional view showing an embodiment of the precursor particles after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particles after the solvent removal step. The diagram (5) of FIG. 1 shows a state where the hydrophobic solvent 4a has been removed from the state shown in the diagram (4) of FIG. 1. By the removal of the hydrophobic solvent from the precursor particles, hollow particles 10 having a gas-filled hollow portion 7 in the interior of the shell 6, are obtained.

Hereinbelow, the five steps described above and other steps are described in order.

(1) Mixture liquid preparation step

The mixture liquid preparation step includes preparing the mixture liquid containing the monomer for skeleton formation, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the following order: (A) the monomer for skeleton formation, (B) the hydrophobic solvent, (C) the polymerization initiator, (D) the dispersion stabilizer and (E) the aqueous medium.

(A) Monomer for skeleton formation

As the monomer for skeleton formation, a known polymerizable monomer conventionally used for the formation of hollow particles can be used, without particular limitation. The monomer for skeleton formation preferably contains a crosslinkable monomer. When the monomer for skeleton formation contains a crosslinkable monomer, the thus-obtained hollow particles easily become spherical, and the hollow portion that is clearly distinguished from the shell is easily formed in the interior of the particles.

From the viewpoint of obtaining the hollow particles excellent in dielectric property, the monomer for skeleton formation preferably contains a hydrocarbon monomer. Meanwhile, an acrylic monomer is preferably used from the point of view that the polymerization reaction is easily stabilized.

In the present disclosure, a polymerizable monomer composed of the elements carbon and hydrogen is referred to as "hydrocarbon monomer"; a crosslinkable monomer composed of the elements carbon and hydrogen is referred to as "crosslinkable hydrocarbon monomer"; and a non-crosslinkable monomer composed of the elements carbon and hydrogen is referred to as "non-crosslinkable hydrocarbon monomer".

Also in the present disclosure, a polymerizable monomer containing a (meth)acryloyl group as a polymerizable functional group is referred to as "acrylic monomer"; a crosslinkable monomer containing a (meth)acryloyl group as a polymerizable functional group is referred to as "crosslinkable acrylic monomer"; and a non-crosslinkable monomer containing a (meth)acryloyl group as a polymerizable functional group is referred to as "non-crosslinkable acrylic monomer", In the crosslinkable acrylic monomer, at least one polymerizable functional group is only required to be a (meth)acryloyl group, and all polymerizable functional groups are preferably (meth)acryloyl groups.

[Crosslinkable monomer]

As the crosslinkable hydrocarbon monomer, examples include, but are not limited to, an aromatic divinyl monomer such as divinylbenzene, divinylbiphenyl and divinylnaphthalene, and a diene monomer such as a linear or branched diolefin (e.g., butadiene, isoprene, 2,3-dimethylbutadiene, pentadiene and hexadiene) and an alicyclic diolefin (e.g., dicyclopentadiene, cyclopentadiene and ethylidene tetracyclododecene). Also, a crosslinkable macromer such as polybutadiene, polyisoprene, SBS (a block copolymer of butadiene and styrene) and SIS (a block copolymer of styrene and isoprene) may be used, for example. Of them, an aromatic divinyl monomer is preferred, and divinylbenzene is more preferred, from the point of view that the polymerization reaction is easily stabilized, and hollow particles excellent in dielectric property, solvent resistance, strength, heat resistance and so on are obtained.

As the crosslinkable acrylic monomer, examples include, but are not limited to, a bifunctional crosslinkable acrylic monomer such as allyl (meth)acrylate, vinyl (meth)acrylate, ethylene glycol di(meth)acrylate, diethylene glycol di(meth)acrylate, pentaerythritol di(meth)acrylate, tricyclodecane dimethanol di(meth)acrylate and 3-(meth)acryloyloxy-2-hydroxypropyl (meth)acrylate, and a trifunctional or higher-functional crosslinkable acrylic monomer such as trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate and ethoxylates thereof. Also, a crosslinkable macromer such as both-(meth)acrylic-terminated polyphenylene ether may be used, for example. Of them, ethylene glycol di(meth)acrylate and pentaerythritol di(meth)acrylate are preferred, and ethylene glycol di(meth)acrylate and pentaerythritol di(meth)acrylate are more preferred, from the viewpoint of ease of stabilization of polymerization reaction and obtaining hollow particles excellent in strength.

In addition, as the crosslinkable monomer, examples include, but are not limited to, a crosslinkable allyl monomer such as diallyl phthalate, and a crosslinkable macromer such as both-vinyl-terminated polyphenylene ether.

These crosslinkable monomers may be used alone or in combination of two or more.

From the viewpoint of improving the strength of the hollow particles, it is also preferable to use a bifunctional crosslinkable monomer containing only two polymerizable functional groups in combination with a trifunctional or higher-functional crosslinkable monomer containing three or more polymerizable functional groups. Those preferred as the difunctional crosslinkable monomer are as described above. As the trifunctional or higher-functional crosslinkable monomer, pentaerythritol tetra(meth)acrylate, trimethylolpropane tri(meth)acrylate, ethoxylated trimethylolpropane tri(meth)acrylate, ethoxylated pentaerythritol tetra(meth)acrylate, pentaerythritol tri(meth)acrylate and dipentaerythritol poly(meth)acrylate are preferred, and pentaerythritol tetra(meth)acrylate and trimethylolpropane tri(meth)acrylate are more preferred.

With respect to 100% by mass of the monomer for skeleton formation, the content of the crosslinkable monomer is preferably 60% by mass or more, more preferably 70% by mass or more, still more preferably 80% by mass or more, and even more preferably 90% by mass or more. When the content of the crosslinkable monomer is equal to or more than the lower limit value, the hollow portion is likely to be formed in the interior of the particles; the particles are likely to be spherical; and since the crosslinking density of the shell can be improved, there is an advantage that the solvent resistance, strength, pressure resistance, heat resistance and so on of the hollow particles can be improved.

When the monomer for skeleton formation contains the non-crosslinkable monomer, with respect to 100% by mass of the monomer for skeleton formation, the content of the crosslinkable monomer may be 98% by mass or less, or it may be 96% by mass or less, for example.

When the crosslinkable monomer contained in the monomer for skeleton formation contains a combination of the bifunctional crosslinkable monomer and the trifunctional or higher-functional crosslinkable monomer, from the viewpoint of improving the strength of the hollow particles, with respect to the total mass (100% by mass) of the crosslinkable monomers, the content of the trifunctional crosslinkable monomer is preferably 10 parts by mass or more, more preferably 20 parts by mass or more, and still more preferably 30 parts by mass or more. On the other hand, it is preferably 70 parts by mass or less, more preferably 60 parts by mass or less, and still more preferably 50 parts by mass or less.

[Non-crosslinkable monomer]

The monomer for skeleton formation may contain a non-crosslinkable monomer.

As a non-crosslinkable hydrocarbon monomer, examples include, but are not limited to, an aromatic monovinyl monomer such as styrene, vinyl toluene, $\alpha$-methylstyrene, p-methylstyrene, ethylvinylbenzene, ethylvinylbiphenyl and ethylvinylnaphthalene, and a monoolefin monomer such as a linear or branched monoolefin (e.g., ethylene, propylene and butylene) and an alicyclic monoolefin (e.g., vinylcyclohexane, norbornene, tricyclododecene and 1,4-methano-1,4,4a,9a-tetrahydrofluorene). Of them, an aromatic monovinyl monomer is preferred, and ethylvinylbenzene is particularly preferred, from the viewpoint of improving the dielectric property of the hollow particles.

As a non-crosslinkable acrylic monomer, examples include, but are not limited to, (meth)acrylic acid alkyl ester (e.g., methyl (meth)acrylate, ethyl (meth)acrylate, butyl (meth)acrylate, 2-ethylhexyl (meth)acrylate and lauryl (meth)acrylate), glycidyl (meth)acrylate, 2-hydroxyethyl (meth)acrylate, (meth)acrylic acid, (meth)acrylamide, N-methylol (meth)acrylamide and N-butoxymethyl (meth)acrylamide. In addition, examples include, but are not limited to, methoxypolyethylene glycol (meth)acrylate, ethoxypolyethylene glycol (meth)acrylate, propoxypolyethylene glycol (meth)acrylate, butaoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono(meth)acrylate, polyethylene glycol propylene glycol mono(meth)acrylate, polyethylene glycol tetramethylene glycol (meth)acrylate, propylene glycol polybutylene glycol mono(meth)acrylate, and monoethylene glycol mono(meth)acrylate. Also, a non-crosslinkable macromer such as (meth)acrylic-terminated polystyrene and (meth)acrylic-terminated polymethyl methacrylate may be used, for example. Of them, (meth)acrylic acid alkyl ester is preferred, and butyl acrylate and methyl methacrylate are more preferred, from the viewpoint of ease of stabilization of polymerization reaction.

In addition, as the non-crosslinkable monomer, examples include, but are not limited to, a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and a vinylpyridine monomer.

These non-crosslinkable monomers may be used alone or in combination of two or more.

From the viewpoint of obtaining the hollow particles excellent in dielectric property, the hydrocarbon monomer is preferably used as the main component of the monomer for skeleton formation. In this case, with respect to 100% by mass of the monomer for skeleton formation, the content of the hydrocarbon monomer is preferably more than 50% by mass, more preferably 60% by mass or more, still more preferably 80% by mass or more, and even more preferably 90% by mass or more. The monomer for skeleton formation is particularly preferably composed of the hydrocarbon monomer. To the extent that does not sufficiently impair the dielectric property of the hollow particles, the monomer for skeleton formation may contain a polymerizable monomer containing a heteroatom. For example, with respect to 100% by mass of the monomer for skeleton formation, the content of the hydrocarbon monomer may be 99% by mass or less, or it may be 98% by mass or less.

From the viewpoint of the reactivity of the polymerization reaction, an acrylic monomer is preferably used as the main component of the monomer for skeleton formation. In this case, with respect to 100% by mass of the monomer for skeleton formation, the content of the acrylic monomer is preferably 40% by mass or more, more preferably more than 50% by mass, still more preferably 70% by mass or more, and even more preferably 90% by mass or more. The monomer for skeleton formation is particularly preferably composed of an acrylic monomer. To the extent that does not sufficiently impair the stability of the polymerization reaction, the monomer for skeleton formation may contain a polymerizable monomer other than the acrylic monomer. For example, with respect to 100% by mass of the monomer for skeleton formation, the content of the acrylic monomer may be 99% by mass or less, or it may be 98% by mass or less. From the viewpoint of suppressing a deterioration in the dielectric property of the hollow particles, it may be 90% by mass or less, 80% by mass or less, 70% by mass or less, or 60% by mass or less.

The content of the monomer for skeleton formation in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the monomer for skeleton formation is preferably from 30% by mass to 60% by mass, and more preferably from 40% by mass to 50% by mass.

From the viewpoint of the mechanical strength of the hollow particles, the content of the monomer for skeleton formation is preferably 95% by mass or more, and more preferably 97% by mass or more, with respect to the total mass (100% by mass) of a solid component obtained by excluding the hydrophobic solvent from the material for the oil phase in the mixture liquid.

In the present disclosure, the solid component includes all components excluding solvent, and a liquid polymerizable monomer and the like are included in the solid component.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the precursor composition preparation step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

As the hydrophobic solvent, such an organic solvent is preferably selected, that the water solubility is smaller than the crosslinkable monomer contained in the monomer for skeleton formation. A known hydrophobic solvent can be appropriately selected depending on the type of the crosslinkable monomer, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferably used.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane and 2-methylpentane, and a cyclic hydrocarbon solvent such as cyclohexane, methylcyclohexane and cycloheptane.

These hydrophobic solvents may be used alone or in combination of two or more.

When the monomer for skeleton formation contains more than 50% by mass of the hydrocarbon monomer, the hydrocarbon solvent is preferably a chain hydrocarbon solvent, more preferably a chain hydrocarbon solvent containing 5 to 8 carbon atoms, and still more preferably at least one kind selected from the group consisting of pentane, hexane, heptane and octane, from the point of view that the hollow portion is easily formed, and the amount of the hydrophobic solvent remaining in the hollow particles can be easily decreased due to the ease of removal.

When the monomer for skeleton formation contains more than 50% by mass of the acrylic monomer, from the same point of view, the hydrocarbon solvent is preferably a hydrocarbon solvent containing 4 to 7 carbon atoms, and more preferably a hydrocarbon solvent containing 5 or 6 carbon atoms. The hydrocarbon solvent may be an aromatic or aliphatic hydrocarbon, and it is particularly preferably an aliphatic hydrocarbon.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the production method of the present disclosure, is preferably 2.5 or less, and more preferably 2.0 or less. The relative permittivity is one of the indices of the level of the polarity of a compound. In the case where the relative permittivity of the hydrophobic solvent is 2.5 or less and sufficiently small, it is considered that phase separation progresses rapidly in the droplets of the monomer composition and the hollow portion is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9), octane (1.9), cyclohexane (2.0).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the monomer for skeleton formation and so on include the hydrophobic solvent. Accordingly, as the content of the hydrophobic solvent increases, the void ratio of the obtained hollow particles tends to increase.

In the present disclosure, with respect to the total (100 parts by mass) of the monomer for skeleton formation and the monomer for amino group introduction, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. Particularly from the viewpoint of controlling the void ratio in the below-described preferred range, the content of the hydrophobic solvent in the mixture liquid is more preferably 70 parts by mass or more and 300 parts by mass or less, and still more preferably 90 parts by mass or more and 200 parts by mass or less, with respect to the total (100 parts by mass) of the monomer for skeleton formation and the monomer for amino group introduction.

(C) Polymerization initiator

In the production method of the present disclosure, the mixture liquid preferably contains an oil-soluble polymerization initiator as the polymerization initiator. As the method for polymerizing the droplets of the monomer composition after suspending the mixture liquid, examples include an emulsion polymerization method using a water-soluble polymerization initiator and a suspension polymerization method using an oil-soluble polymerization initiator. By using the oil-soluble polymerization initiator, suspension polymerization can be performed.

The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile). In the production method of the present disclosure, an organic peroxide is preferably used as the polymerization initiator. Since an organic peroxide can easily promote a polymerization reaction, it can reduce the amount of unreacted polymerizable functional groups. In addition, since a decomposition product of the organic peroxide is less likely to remain after a polymerization reaction, a deterioration in the dielectric property of the hollow particles can be suppressed. The unreacted polymerizable functional groups and a decomposition product of the polymerization initiator remaining in the shell increase the molecular mobility of the shell. Accordingly, when the amount of the remaining unreacted polymerizable functional groups and decomposition polymerization initiator is large, the dielectric dissipation factor of the hollow particles may increase.

With respect to 100 parts by mass of the monomer for skeleton formation in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, a polymerization reaction can progress sufficiently. When the content of the polymerization initiator is equal to or less than the upper limit value, the oil-soluble polymerization initiator is less likely to remain after the end of the polymerization reaction, and an unexpected side reaction is less likely to progress.

(D) Dispersion stabilizer

The dispersion stabilizer is an agent for dispersing the droplets of the monomer composition in the aqueous medium in the suspension step. As the dispersion stabilizer, examples include, but are not limited to, an inorganic dispersion stabilizer, an organic or inorganic water-soluble polymer stabilizer, and a surfactant. In the present disclosure, an inorganic dispersion stabilizer is preferably used as the dispersion stabilizer, from the point of view that the particle diameter of the droplets can be easily controlled in the suspension, and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron(II)hydroxide; and silicon dioxide. These inorganic dispersion stabilizers may be used alone or in combination of two or more.

Of these inorganic dispersion stabilizers, a sparingly water-soluble inorganic dispersion stabilizer is preferred; a sparingly water-soluble metal salt such as the above-mentioned sulfate, carbonate, phosphate and metal hydroxide is more preferred; a metal hydroxide is still more preferred; and magnesium hydroxide is particularly preferred.

In the present disclosure, the sparingly water-soluble inorganic dispersion stabilizer is preferably an inorganic compound such that the solubility in 100 g of water is 0.5 g or less. Also in the present disclosure, the sparingly water-soluble metal salt is preferably an inorganic metal salt such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred. The water-soluble polyvalent metal salts may be used alone or in combination of two or more.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (e.g., polyacrylic acid), a cellulose (e.g., hydroxyethyl cellulose, carboxymethyl cellulose, methyl cellulose, ethyl cellulose), polyvinylpyrrolidone, polyacrylimide, polyethylene oxide and a poly(hydroxystearic acid-g-methyl methacrylate-co-methacrylic acid) copolymer.

As an inorganic water-soluble high-molecular-weight compound, examples include, but are not limited to, sodium tripolyphosphate.

The surfactant is a compound containing both a hydrophilic group and a hydrophobic group per molecule. As the surfactant, examples include, but are not limited to, a known ionic surfactant such as an anionic surfactant, a cationic surfactant and an ampholytic surfactant, and a known nonionic surfactant.

The content of the dispersion stabilizer is not particularly limited. With respect to the total mass (100 parts by mass) of the monomer for skeleton formation and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is generally 2 parts by mass or more and 15 parts by mass or less, and preferably 3 parts by mass or more and 8 parts by mass or less.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the monomer for skeleton formation, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the monomer for skeleton formation the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. As the disperser that can be used to prepare the suspension, examples include, but are not limited to, a horizontal or vertical in-line type disperser such as MILDER (product name, manufactured by Pacific Machinery & Engineering Co., Ltd.), CAVITRON (product name, manufactured by EUROTEC, Ltd.) and DISPAX-REACTOR (registered trademark) DRS SERIES (product name, manufactured by IKA), and an emulsifying disperser such as HOMOMIXER MARK II series (manufactured by PRIMIX Corporation).

In the suspension prepared in the suspension step, the droplets of the monomer composition containing the lipophilic materials mentioned above and having a particle diameter of approximately from 1 um to 50 $\mu$m, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed by the oil-soluble monomer composition and the dispersion stabilizer surrounding the periphery of the oil-soluble monomer composition. The droplets of the monomer composition contain the oil-soluble polymerization initiator, the monomer for skeleton formation and the hydrophobic solvent.

The droplets of the monomer composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In such a suspension polymerization method using the oil-soluble polymerization initiator, there is no opportunity for the polymerization initiator to come into contact with the monomer for skeleton formation dispersed in the aqueous medium. Thus, the subgeneration of surplus resin particles (e.g., solid particles having a relatively small particle diameter) in addition to the target resin particles having the hollow portion, can be suppressed by using the oil-soluble polymerization initiator.

(3) Precursor composition preparation step

This step includes preparing the precursor composition containing the precursor particles by subjecting the suspension obtained by the above-described suspension step to a polymerization reaction and adding the monomer for amino group introduction during the polymerization reaction to further continue the polymerization reaction, wherein the precursor particles comprise the shell and the hollow portion surrounded by the shell, and the precursor particles include the hydrophobic solvent in the hollow portion, and wherein the shell of the precursor particles contains the polymer of the monomer for skeleton formation and the monomer for amino group introduction, and the shell has amino groups on the outside surface thereof. The precursor particles are formed by the polymerization of the monomer for skeleton formation, which is contained in the droplets of the monomer composition, and the monomer for amino group introduction, which is added during the polymerization reaction.

In the present disclosure, the polymerization reaction until just before adding the monomer for amino group introduction may be referred to as the "first polymerization reaction", and the polymerization reaction after adding the monomer for amino group introduction may be referred to as the "second polymerization reaction".

As the monomer for amino group introduction, a polymerizable monomer containing a radically polymerizable group and an amino group is used.

From the viewpoint of excellent reactivity, the radically polymerizable group is preferably at least one selected from a (meth)acryloyl group, a vinyl group and an allyl group, and more preferably a (meth)acryloyl group.

The amino group is only required to be a monovalent functional group obtained by removing hydrogen from ammonia, primary amine or secondary amine, such as -NH$_2$, -NHR and -NRR'. From the viewpoint of improving adhesion to resin, -NH$_2$ or -NHR is preferred. Each of R and R' in -NHR and -NRR' represents an organic group. From the viewpoint of improving the adhesion of the hollow particles to resin, each of R and R' is preferably an alkyl group containing 6 caron atoms or less, and more preferably an alkyl group containing 4 carbon atoms or less. Also, R is preferably an organic group containing a radically polymerizable group. The organic group containing a radically polymerizable group is preferably an allyl group, a (meth)acryloyl group, or a group obtained by substituting the hydrogen atom(s) at the terminal of an alkyl group with at least one radically polymerizable group selected from the group consisting of a (meth)acryloyl group, a vinyl group and an allyl group. Here, the alkyl group preferably contains 1 to 6 carbon atoms, and more preferably 1 to 4 carbon atoms.

From the viewpoint of improving the adhesion of the hollow particles to resin, the monomer for amino group introduction preferably has a radically polymerizable group at one terminal thereof and an amino group at the other terminal via a linking group. As the linking group, examples include, but are not limited to, a linking group containing a chain structure that contains 2 to 10 atoms (more preferably 3 to 6 atoms), a linking group containing a cyclic structure such as cyclohexane and a benzene ring, and combinations thereof. The chain structure may contain a branched chain or a substituent, and the cyclic structure may contain a substituent. Also, the linking group may be composed of hydrocarbon, or it may contain a heteroatom. The linking group preferably contains an alkylene group containing 1 to 6 carbon atoms, and more preferably an alkylene group containing 2 to 4 carbon atoms. The adhesion of the hollow particles to resin is easily improved when the monomer for amino group introduction having a radically polymerizable group at one terminal thereof and an amino group at the other terminal via the linking group as described above, is introduced to the surface of the hollow particles. It is presumed that since the above monomer for amino group introduction has the amino group at the terminal of the linking group extending from the particle surface, the amino group easily reacts with the functional group of the resin. Accordingly, the hollow particles having the amino group introduced thereto by use of such a monomer for amino group introduction, becomes hollow particles excellent in adhesion to resin, even when the amine amount per unit area is relatively small.

Also, a polymerizable monomer containing several radically polymerizable groups and an amino group is preferably used as the monomer for amino group introduction. It is presumed that such a monomer for amino group introduction easily reacts on the shell surface due to the several radically polymerizable groups, and the amino group is easily introduced to the shell surface, accordingly.

As the monomer for amino group introduction, such a monomer is used, that the solubility in water at 20°C is larger than that of the hydrophobic solvent and is from 0.5 g/L to 1000 g/L, preferably from 0.5 g/L to 80 g/L. Accordingly, the monomer for amino group introduction is easily incorporated to the shell surface during the polymerization reaction. The solubility of the monomer for amino group introduction in water at 20°C is preferably 70 g/L or less, more preferably 60 g/L or less, and still more preferably 50 g/L or less. On the other hand, it is preferably 1.0 g/L or more, and more preferably 2.0 g/L or more.

Since the monomer for amino group introduction is easily incorporated to the shell surface during the polymerization reaction, the molecular weight thereof is preferably 300 or less, and more preferably 200 or less. The lower limit of the molecular weight of the monomer for amino group introduction is not particularly limited, and it is generally 50 or more.

As the monomer for amino group introduction having a radically polymerizable group at one terminal thereof and an amino group at the other terminal via a linking group, examples include, but are not limited to, 2-(tert-butylamino)ethyl (meth)acrylate, 4-vinylbenzylamine, dimethylaminoethyl (meth)acrylate, and diethylaminoethyl (meth)acrylate. From the viewpoint of improving the adhesion of the hollow particles to resin, 2-(tert-butylamino)ethyl (meth)acrylate, or 4-vinylbenzylamine is preferred, and 2-(tert-butylamino)ethyl (meth)acrylate is more preferred.

Each of 2-(tert-butylamino)ethyl (meth)acrylate, dimethylaminoethyl (meth)acrylate, and diethylaminoethyl (meth)acrylate has a (meth)acryloyl group at one terminal thereof, and it has an amino group at the other terminal via -O-$(CH_2)_2$- as a linking group. Also, 4-vinylbenzylamine has a vinyl group at one terminal thereof, and it has an amino group at the other terminal via -Ph-$CH_2$- (where Ph is a p-phenylene group) as a linking group.

As the monomer for amino group introduction containing several radically polymerizable groups and an amino group, diallylamine or the like is preferably used, for example.

To introduce sufficient amounts of amino groups to the surface of the hollow particles from the viewpoint of adhesion to resin, the lower limit of the amount of the added monomer for amino group introduction is preferably 2% by mass or more, more preferably 5% by mass or more, and still more preferably 10% by mass or more, with respect to the total (100% by mass) of the monomer for skeleton formation contained in the mixture liquid and monomer for amino group introduction. From the viewpoint of obtaining performances arising from the composition of the monomer for skeleton formation, such as dielectric property, the upper limit is preferably 40% by mass or less, and more preferably 30% by mass or less, with respect to the total (100% by mass) of the monomer for skeleton formation contained in the mixture liquid and monomer for amino group introduction.

In the production method of the present disclosure, to obtain the spherical hollow particles having the hollow portion in the interior, the content of the crosslinkable monomer is adjusted to 60% by mass or more with respect to the total (100% by mass) of the monomer for skeleton formation and the monomer for amino group introduction. From the viewpoint of improving the solvent resistance, strength, pressure resistance, heat resistance and so on of the hollow particles, the content of the crosslinkable monomer is preferably 70% by mass or more, and still more preferably 80% by mass or more. The upper limit of the content of the crosslinkable monomer is not particularly limited. When the monomer for skeleton formation or the monomer for amino group introduction contains a non-crosslinkable monomer, with respect to the total (100% by mass) of the monomer for skeleton formation and the monomer for amino group introduction, the upper limit may be 98% by mass or less, 95% by mass or less, 90% by mass or less, or 85% by mass or less.

In the production method of the present disclosure, the suspension obtained by the above-described suspension step is subjected to a polymerization reaction, and when the polymerization conversion rate of the monomer for skeleton formation in the suspension reaches 1% by mass or more and 99% by mass or less, the monomer for amino group introduction is added to further continue the polymerization reaction. From the viewpoint of efficiently introducing amino groups to the surface of the hollow particles and from the viewpoint of improving the dielectric property of the hollow particles, the polymerization conversion rate of the monomer for skeleton formation in the suspension when adding the monomer for amino group introduction, is preferably 3% by mass or more, more preferably 5% by mass or more, still more preferably 10% by mass or more, and even more preferably 15% by mass or more, or it may be 40% by mass or more. On the other hand, the polymerization conversion rate is preferably 90% by mass or less, more preferably 80% by mass or less, still more preferably 70% by mass or less, and even more preferably 60% by mass or less.

The polymerization conversion rate of the monomer for skeleton formation when adding the monomer for amino group introduction having a radically polymerizable group at one terminal thereof and an amino group at the other terminal via a linking group, is preferably from 5% by mass to 90% by mass, and more preferably from 10% by mass to 70% by mass.

The polymerization conversion rate of the monomer for skeleton formation when adding the monomer for amino group introduction containing several radically polymerizable groups and an amino group, is preferably from 3% by mass to 75% by mass, and more preferably from 10% by mass to 70% by mass.

In the present disclosure, the polymerization conversion rate can be obtained by the following formula (C) from the mass of the monomer for skeleton formation contained in the suspension before adding the monomer for amino group introduction and the mass of the unreacted monomer for skeleton formation contained in the suspension just before the above addition. The mass of the monomer for skeleton formation contained in the suspension before adding the monomer for amino group introduction, is the total mass of the polymerized monomer for skeleton formation and the unreacted monomer for skeleton formation. The mass of the unreacted monomer for skeleton formation can be measured by use of gas chromatography (GC).

Polymerization conversion rate (% by mass) = 100-([Mass of the unreacted monomer for skeleton formation]/[Mass of the monomer for skeleton formation contained in the suspension])$\times$100 Formula (C)

In the production method of the present disclosure, the polymerization system of the polymerization reaction is not particularly limited. For example, a batch system, a semicontinuous system or a continuous system may be employed.

The polymerization temperature is preferably from 40°C to 90°C, and more preferably from 50°C to 80°C.

The temperature increase rate up to the polymerization temperature, is preferably from 10°C/h to 60°C/h, and more preferably from 15°C/h to 55°C/h.

The polymerization reaction time is the sum of the first polymerization reaction time carried out until just before adding the monomer for amino group introduction and the second polymerization reaction time carried out after adding the monomer for amino group introduction. The polymerization reaction time is preferably from 1 hour to 48 hours, and more preferably from 4 hours to 36 hours.

Each of the first polymerization reaction time and the second polymerization reaction time is not particularly limited and is only required to be adjusted so that the polymerization conversion rate of the monomer for skeleton formation at the time of adding the monomer for amino group introduction falls within the above-described preferred range. For example, after the suspension temperature is increased to the polymerization temperature, the first polymerization reaction is carried out for preferably 1 minute to 8 hours, more preferably 20 minutes to 8 hours, and still more preferably 30 minutes to 4 hours; moreover, after the monomer for amino group introduction is added, the second polymerization reaction is carried out for preferably 1 hour to 48 hours, and more preferably 2 hours to 44 hours.

In the precursor composition preparation step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

(4) Solid-liquid separation step

The solid-liquid separation step includes performing solid-liquid separation of the precursor composition which contains the precursor particles and which is obtained by the above-described precursor composition preparation step, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

(5) Solvent removal step

The solvent removal step includes removing the hydrophobic solvent from the precursor particles obtained by the solid-liquid separation step.

For example, by removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the hydrophobic solvent may be removed as follows: the precursor composition obtained in the precursor composition preparation step, which is in the form of slurry, is not subjected to solid-liquid separation and, instead, the hydrophobic solvent may be removed in the slurry containing the precursor particles and the aqueous medium.

In this method, for example, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization reaction carried out in the precursor composition preparation step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, an aqueous slurry of the hollow particles including an inert gas is obtained. The slurry is subjected to solid-liquid separation to obtain hollow particles, and the residual aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by removing, in the slurry containing the precursor particles and the aqueous medium, the hydrophobic solvent from the precursor particles, subjecting the slurry to solid-liquid separation, and then removing the residual aqueous medium from the particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, the hydrophobic solvent included in the precursor particles may be removed therefrom after the precursor composition preparation step and before the solid-liquid separation step, without the solid-liquid separation of the slurry precursor composition obtained in the precursor composition preparation step, by use of the following method, for example: evaporating the hydrophobic solvent included in the precursor particles from the precursor composition at a predetermined pressure (a high, normal or reduced pressure), or evaporating the hydrophobic solvent included in the precursor particles from the precursor composition by introducing water vapor or inert gas such as nitrogen, argon and helium to the precursor composition at a predetermined pressure (a high, normal or reduced pressure).

(6) Others

In addition to the steps (1) to (5) mentioned above, the following washing step (6-a) and the following particle interior substitution step (6-b) may be added, for example.

(6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably adjusted to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Particle interior substitution step

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

2. Hollow particles

The hollow particles of the present disclosure are hollow particles which comprise a shell containing a resin and a hollow portion surrounded by the shell,

wherein, as the resin, the shell contains a polymer which contains 60% by mass or more of crosslinkable monomer units;
wherein the hollow particles have amino groups on a surface thereof; and
wherein an amine amount per unit area of the hollow particles, which is obtained by the following formula (A) using an amine value of the hollow particles and a specific surface area of the hollow particles, is 5.00 $\mu$mol/m$^2$ or more:

$$\text{Amine amount } (\mu\text{mol/m}^2) = \text{Amine value } (\mu\text{mol/g})/\text{Specific surface area } (\text{m}^2/\text{g})$$

In the hollow particles of the present disclosure, the amine amount per unit area is only required to be 5.00 $\mu$mol/m$^2$ or more. From the viewpoint of further improving the adhesion to resin, it is preferably 6.00 $\mu$mol/m$^2$ or more, and more preferably 6.20 $\mu$mol/m$^2$ or more. The upper limit of the amine amount per unit area is not particularly limited. From the viewpoint of obtaining performances arising from the composition of the monomer for skeleton formation, such as dielectric property, the upper limit is preferably 70 $\mu$mol/m$^2$ or less, more preferably 50 $\mu$mol/m$^2$ or less, still more preferably 30 $\mu$mol/m$^2$ or less, and even more preferably 20 $\mu$mol/m$^2$ or less.

In the present disclosure, the amine value of the hollow particles is measured by the potentiometric titration according to JIS K 7237.

Also in the present disclosure, the specific surface area of the hollow particles can be calculated by the following formula (B) from the volume average particle diameter of the hollow particles and the apparent density $D_1$ thereof, on the supposition that the hollow particles are spherical. In the following formula (B), the volume average particle diameter is a value expressed in units of "m", and the apparent density $D_1$ is a value expressed in units of "g/m$^3$".

$$\text{Specific surface area } (\text{m}^2/\text{g}) = 6/(\text{Volume average particle diameter (m)} \times \text{Apparent density } D_1 \text{ (g/m}^3)) \qquad \text{Formula (B)}$$

As the main component of the shell, the hollow particles of the present disclosure typically contain the polymer of the above-described monomer for skeleton formation and monomer for amino group introduction. Since the polymer forms the skeleton of the shell of the hollow particles, the shell of the hollow particles of the present disclosure contains the above-described amino group-containing monomer units derived from the monomer for amino group introduction. The amino groups on the surface of the hollow particles of the present disclosure are preferably the amino groups contained in the amino group-containing monomer units.

When the hollow particles of the present disclosure contain the amino group-containing monomer units derived from the monomer for amino group introduction, from the viewpoint of adhesion to resin, with respect to 100% by mass of all monomer units contained in the polymer in the shell, the content of the amino group-containing monomer units is preferably 2% by mass or more, more preferably 5% by mass or more, and still more preferably 10% by mass or more. On the other hand, from the viewpoint of obtaining performances arising from the composition of the monomer units for skeleton formation, such as dielectric property, the content is preferably 40% by mass or less, and more preferably 30% by mass or less.

In the hollow particles of the present disclosure, the content of the crosslinkable monomer units is 60% by mass or more with respect to 100% by mass of all monomer units contained in the polymer in the shell, from the point of view that the hollow particles of the present disclosure become spherical particles having the hollow portion. From the viewpoint of improving the solvent resistance, strength, pressure resistance, heat resistance and so on of the hollow particles, the content of the crosslinkable monomer units is preferably 70% by mass or more, and more preferably 80% by mass or more. The upper limit of the content of the crosslinkable monomer units is not particularly limited. When the polymer contains a non-crosslinkable monomer units, with respect to 100% by mass of all monomer units contained in the polymer, the content of the crosslinkable monomer units may be 98% by mass or less, 95% by mass or less, 90% by mass or less, or 85% by mass or less.

To impart excellent dielectric property to the hollow particles of the present disclosure, with respect to 100 parts by mass of all monomer units contained in the polymer in the shell, the content of the hydrocarbon monomer units is preferably more than 50% by mass, more preferably 60% by mass or more, still more preferably 70% by mass or more, and even more preferably 80% by mass or more. From the point of view that the amino group-containing monomer units are sufficiently contained in the hollow particles of the present disclosure which contain, as just described, the hydrocarbon monomer units as the main component, the upper limit of the content of the hydrocarbon monomer units is preferably 95% by mass or less, and more preferably 90% by mass or less, with respect to 100 parts by mass of all monomer units contained in the polymer.

In the hollow particles of the present disclosure obtained by using the acrylic monomer as the monomer for skeleton formation, with respect to 100 parts by mass of all monomer units contained in the polymer in the shell, the content of the acrylic monomer units is not particularly limited, and it is preferably more than 50% by mass, more preferably 60% by mass or more, still more preferably 70% by mass or more, and even more preferably 80% by mass or more. In this case, the upper limit of the content of the acrylic monomer units is not particularly limited. The polymer may be composed of the acrylic monomer units, or the upper limit may be 95% by mass or less, or it may be 90% by mass or less. From the viewpoint of suppressing a deterioration in the dielectric property, the upper limit may be 80% by mass or less, 70% by mass or less, or 60% by mass or less.

When the hollow particles of the present disclosure contain the polymer of the monomer for skeleton formation and the monomer for amino group introduction, in the total solid content (100% by mass) of the shell, the content of the polymer is preferably 96% by mass or more, more preferably 97% by mass or more, still more preferably 98% by mass or more, and even more preferably 99% by mass or more. By adjusting the content of the polymer to equal to or more than the lower limit value, the dielectric property, strength, pressure resistance and so on of the hollow particles can be improved.

Also in the hollow particles of the present disclosure, from the viewpoint of suppressing a deterioration in the dielectric property, in the total solid content (100% by mass) of the shell, the content of components other than the polymer is preferably 4% by mass or less, more preferably 3% by mass or less, still more preferably 2% by mass or less, and even more preferably 1% by mass or less.

As the components other than the polymer contained in the hollow particles of the present disclosure, examples include, but are not limited to, residual unreacted polymerizable monomers, polymers different from the polymer of the polymerizable monomer, the decomposition product of the polymerization initiator, and low-molecular compounds contained as impurities in the raw materials for the monomer for skeleton formation or the monomer for amino group introduction. When the components have a low boiling point (e.g., a boiling point of 200°C or less), they are generally removed in the process of producing the hollow particles. However, when the components have a high boiling point (e.g., a boiling point of 250°C or more), there is a possibility that they are not removed and remain.

The relative permittivity of the hollow particles of the present disclosure at a frequency of 1 GHz is preferably 2.00 or less, more preferably 1.60 or less, and still more preferably 1.40 or less. The lower limit of the relative permittivity of the hollow particles of the present disclosure at a frequency of 1 GHz, is not particularly limited, and it may be 1.00 or more, for example.

The dielectric dissipation factor of the hollow particles of the present disclosure at a frequency of 1 GHz is preferably $3.00 \times 10^{-2}$ or less, more preferably $5.00 \times 10^{-3}$ or less, still more preferably $2.50 \times 10^{-3}$ or less, and even more preferably $1.00 \times 10^{-3}$ or less. The lower limit of the dielectric dissipation factor is not particularly limited, and it may be $1.00 \times 10^{-4}$ or more, for example.

In the present disclosure, the relative permittivity and dielectric dissipation factor of the hollow particles are measured by use of a perturbation-type measuring device.

The void ratio of the hollow particles of the present disclosure is preferably 50% or more, more preferably 60% or more, still more preferably 65% or more, and even more preferably 70% or more. When the void ratio is equal to or more than the lower limit value, the hollow particles are excellent in dielectric property and also excellent in lightness in weight, heat insulation properties and so on. The upper limit of the void ratio of the hollow particles is not particularly limited. From the viewpoint of suppressing a decrease in the strength of the hollow particles to be less likely to collapse, the upper limit is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

Apparent density $D_1$ = [Mass of the hollow particles]/(100-[Mass of the isopropanol]/[Specific gravity of the isopropanol at the measuring temperature])      Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm$^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm$^3$) of the hollow particles is calculated by the following formula (II).

True density $D_0$ = [Mass of the pulverized hollow particles]/(100-[Mass of the isopropanol]/[Specific gravity of the isopropanol at the measuring temperature])      Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

$$\text{Void ratio (\%)} = 100 - (\text{Apparent density } D_1 / \text{True density } D_0) \times 100$$

In the present disclosure, the volume average particle diameter of the hollow particles can be appropriately adjusted depending on the intended use, and it is not particularly limited. The lower limit of the volume average particle diameter is preferably 1.00 μm or more, more preferably 1.50 μm or more, and still more preferably 2.00 μm or more. When the volume average particle diameter of the hollow particles is equal to or more than the lower limit value, the aggregability of the hollow particles decreases, and the hollow particles exert excellent dispersibility, accordingly.

Also in the present disclosure, the upper limit of the volume average particle diameter of the hollow particles used to decrease the permittivity or dielectric dissipation factor, is preferably 10.00 μm or less, more preferably 8.00 μm or less, and still more preferably 5.00 μm or less. When the volume average particle diameter of the hollow particles is equal to or less than the upper limit value, since the particle diameter is sufficiently small, the hollow particles are preferably used as a substrate material such as an electronic circuit board, and they can be added to thin small substrates. From the viewpoint of the balance between pressure resistance and mechanical strength, the upper limit of the volume average particle diameter is preferably 50 um or less, more preferably 30 um or less, and still more preferably 20 um or less.

The shape of the hollow particles of the present disclosure is not particularly limited, as long as the hollow portion is formed in the interior. As the shape, examples include, but are not limited to, a spherical shape, an ellipsoidal shape and an irregular shape. Among them, a spherical shape is preferable in terms of ease of production, pressure resistance and so on.

The hollow particles of the present disclosure may have one or two or more hollow portions. From the viewpoint of maintaining good balance between the high void ratio and the mechanical strength and from the viewpoint of improving the dielectric property, the hollow particles preferably have only one hollow portion. In the hollow particles of the present disclosure, the percentage of the particles having only one or two hollow portions is preferably 90% by mass or more, and more preferably 95% by mass or more. Moreover, the percentage of the particles having only one hollow portion is preferably 90% by mass or more, and more preferably 95% by mass or more.

The shell of the hollow particles of the present disclosure and, when the hollow particles have two or more hollow portions, a partition separating the adjacent hollow portions from each other may be porous. From the viewpoint of improving the dielectric property, the shell and the partition are preferably solid.

The average circularity of the hollow particles of the present disclosure may be from 0.950 to 0.995.

An example of the image of the shape of the hollow particles of the present disclosure, is a bag made of a thin film and inflated with gas. A cross-section of the bag is like the hollow particle 10 shown in the diagram (5) of FIG. 1. In this example, one thin film is provided on the outside, and the interior is filled with gas.

The shape of the particles can be determined by SEM or TEM, for example.

The particle size distribution (volume average particle diameter (Dv)/number average particle diameter (Dn) of the hollow particles may be 1.1 or more and 2.5 or less, for example. When the particle size distribution is 2.5 or less, hollow particles such that compressive strength and heat resistance slightly vary between the hollow particles, can be obtained. Also when the particle size distribution is 2.5 or less, a product having uniform thickness can be produced in the case of producing, for example, a sheet-shaped resin molded body mixed with the hollow particles of the present disclosure.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The hollow particles of the present disclosure are excellent in dielectric property, since the percentage of particles having a circularity is 0.85 or less is small. The particles having a circularity of 0.85 or less are typically cracked particles or deformed particles such as dented particles. In the present disclosure, such particles may be referred to as "irregular-shaped particles". Such irregular-shaped hollow particles have a low void ratio compared to spherical hollow particles; therefore, they are poor in dielectric property. Accordingly, the dielectric property of the hollow particles can be improved by decreasing the percentage of the irregular-shaped particles included in the hollow particles.

The irregular-shaped particles have the following problem: compared to spherical particles, the irregular-shaped particles are poor in dispersibility since they are likely to aggregate when dispersed in the binder resin. In addition, the irregular-shaped particles have the following problem: compared to spherical particles, the irregular-shaped particles are poor in pressure resistance since external pressure is likely to be locally applied thereto. When the irregular-shaped particles are dispersed in the binder resin, aggregates are likely to be formed; external pressure is likely to be applied to the aggregates; and the pressure resistance further deteriorates accordingly. Therefore, the dispersibility and pressure resistance of the hollow particles can be improved by decreasing the percentage of the irregular-shaped particles included in the hollow particles.

The hollow particles of the present disclosure may contain, as impurities, small amounts of particles having a low circularity, such as cracked or deformed particles. In 100% by mass of the hollow particles of the present disclosure, the percentage of the particles having a circularity of 0.85 or less is preferably 10% by mass or less, more preferably 7% by mass or less, still more preferably 5% by mass or less, even more preferably 4% by mass or less, and particularly preferably 3% by mass or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles becomes more complex.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

In the present disclosure, the thermal decomposition initiation temperature of the hollow particles is preferably from 150°C to 400°C, and more preferably from 200°C to 350°C. When the thermal decomposition initiation temperature is in the range, the hollow particles are excellent in heat resistance.

In the present disclosure, the thermal decomposition initiation temperature of the hollow particles can be measured as a 5% weight reduction temperature, using a TG-DTA device in an air atmosphere, in the conditions of an air flow rate of 230 mL/min and a temperature increase rate of 10°C/min.

As the applications of the hollow particles of the present disclosure, examples include, but are not limited to, an additive used in the following, for example: members such as a low dielectric material, a heat insulation material, a sound insulation material and a light reflective material, which are used in various kinds of fields such as the automotive field, the electronics field, the electric field, the architecture field, the aviation field and the space field; food containers; footwears such as sports shoes and sandals; components of household appliances; components of bicycles; stationery supplies; tools; and filaments of 3D printers. The hollow particles of the present disclosure are less likely to collapse when mixed and kneaded with other materials and even when molded after mixing and kneading with other materials. When they are added to a molded body, they exert excellent effects as a weight reducing material, a heat insulation material, an acoustic insulation material, a damping material and so on. Accordingly, the hollow particles of the present disclosure are suitable as an additive for molded bodies. Also, the hollow particles of the present disclosure are less likely to collapse even when kneaded with a resin and even when molded into a molded body after kneading with a resin, and they have excellent adhesion to a resin. Accordingly, the hollow particles can be also used as an additive for molded bodies made of a resin. The hollow particles of the present disclosure can be contained as a filler in a fiber reinforced molded body formed by use of reinforced fibers and a resin.

Due to having excellent dielectric property, the hollow particles of the present disclosure are preferably used as an additive for achieving low permittivity or low transmission loss in the electronics or electric field. For example, the hollow particles of the present disclosure are preferably used as a material for electronic circuit boards. More specifically, by incorporating the hollow particles of the present disclosure in the insulation resin layer of an electronic circuit board, the relative permittivity of the insulation resin layer can be decreased, and the transmission loss of the electronic circuit board can be reduced.

Also, the hollow particles of the present disclosure are preferably used as an additive used in materials for semiconductor devices. The materials are used, for example, for interlayer insulation materials, dry film resists, solder resists, bonding wires, magnet wires, semiconductor encapsulating materials, epoxy encapsulating materials, molded underfill materials, underfill materials, die bonding pastes, buffer coating materials, copper-clad laminates, flexible substrates, high frequency device modules, antenna modules and automotive radars. Of them, the hollow particles of the present disclosure are particularly preferable as an additive used in materials for semiconductor devices, which are used for interlayer insulation materials, solder resists, magnet wires, epoxy encapsulating materials, underfill materials, buffer coating materials, copper-clad laminates, flexible substrates, high frequency device modules, antenna modules and automotive radars.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing electric conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

3. Resin composition

The resin composition of the present disclosure contains the hollow particles of the present disclosure and a binder resin containing a functional group reactive with an amino group.

[Binder resin]

The binder resin containing a functional group reactive with an amino group is only required to have a functional group reactive with an amino group when being mixed with the hollow particles of the present disclosure. After the amino group of the hollow particles is reacted with the functional group of the binder resin to form a crosslink, the binder resin may be free of the functional group.

In the present disclosure, the reaction of the amino group on the surface of the hollow particles with the functional group of the binder resin is only required to be a covalent bond forming reaction such as an addition reaction, a substitution reaction, a dehydration-condensation reaction and an aminolysis reaction.

The binder resin containing a functional group reactive with an amino group may be an unreacted monomer, a prepolymer, a macromonomer, a polymer, or a precursor of a cured resin such as polyamic acid, when mixed with the hollow particles of the present disclosure.

As the functional group reactive with an amino group, examples include, but are not limited to, an epoxy group; an acidic group such as a carboxy group, a carboxylic anhydride group and a sulfo group; an isocyanate group; and an alkoxycarbonyl group containing 1 to 4 carbon atoms. From the viewpoint of reactivity, at least one selected from the group consisting of an epoxy group, a carboxy group and a carboxylic anhydride group is preferred. The binder resin containing such a functional group can be appropriately selected from known resins and used without particular limitation. For example, epoxy-based resin, polyimide-based resin, urethane-based resin, a precursor thereof or a raw material compound thereof can be preferably used. Epoxy-based resin contains an epoxy group, at least when it is in a state before being subjected to a curing reaction with a curing agent. Polyimide-based resin contains a carboxy group when it is in a state of polyamic acid before being subjected to a curing reaction (imidization reaction). The tetracarboxylic acid component which is a raw material for polyamic acid, contains a carboxy group or a carboxylic anhydride group. Urethane-based resin is obtained by the reaction of a polyol component, which contains a hydroxy group, and a polyisocyanate component, which contains an isocyanate group. Accordingly, urethane-based resin contains a hydroxy group and an isocyanate group when it is in a state of before being subjected to curing reaction. As the resin that contains an alkoxycarbonyl group containing 1 to 4 carbon atoms, examples include, but are not limited to, polymethyl (meth)acrylate.

These binder resins containing the functional group may each be a thermosetting resin, a thermoplastic resin, an adhesive curable at room temperature, or a photocurable resin.

The binder resin contained in the resin composition of the present disclosure may be a resin that functions as a binder when it is cured by heating, by light irradiation, or by use of a curing agent, a polymerization initiator, a catalyst or the like.

Since epoxy-based resin, polyimide-based resin and urethane-based resin are excellent in dielectric property, they are preferably used in applications that require a decrease in permittivity or dielectric dissipation factor.

As the epoxy-based resin, examples include, but are not limited to, bixylenol-type epoxy resin, bisphenol A-type epoxy resin, bisphenol F-type epoxy resin, bisphenol S-type epoxy resin, bisphenol AF-type epoxy resin, dicyclopentadiene-type epoxy resin, trisphenol-type epoxy resin, naphthol novolac-type epoxy resin, phenol novolac-type epoxy resin, tert-butyl-catechol-type epoxy resin, naphthalene-type epoxy resin, naphthol-type epoxy resin, anthracene-type epoxy resin, glycidyl amine-type epoxy resin, glycidyl ester-type epoxy resin, cresol novolac-type epoxy resin, phenol aralkyl-type epoxy resin, biphenyl-type epoxy resin, linear aliphatic epoxy resin, butadiene structure-containing epoxy resin, alicyclic epoxy resin, heterocyclic epoxy resin, spiro ring-containing epoxy resin, cyclohexane-type epoxy resin, cyclohexanedimethanol-type epoxy resin, naphthylene ether-type epoxy resin, trimethylol-type epoxy resin, tetraphenylethane-type epoxy resin, isocyanurate-type epoxy resin, phenolphthalimidine-type epoxy resin, and phenolphthalein-type epoxy resin. These epoxy-based resins may be used alone or in combination of two or more kinds.

As the polyol component used in the urethane-based resin, examples include, but are not limited to, ethylene glycol, propylene glycol, glycerin, trimethylolpropane, pentaerythritol, sorbitol, sucrose, polyoxypropylene triol and polyester polyol.

As the polyisocyanate component used in the urethane-based resin, examples include, but are not limited to, aliphatic polyisocyanate and aromatic polyisocyanate.

As the aliphatic polyisocyanate, examples include, but are not limited to, polyisocyanate having a chain structure, such as tetramethylene diisocyanate, hexamethylene diisocyanate, dodecamethylene diisocyanate, 2,2,4-trimethylhexamethylene diisocyanate, 2,4,4-trimethylhexamethylene diisocyanate, lysine diisocyanate, 2-methylpentane-1,5-diisocyanate, 3-methylpentane-1,5-diisocyanate, and polyisocyanate having a cyclic structure, such as isophorone diisocyanate, hydrogenated xylylene diisocyanate, 4,4'-dicyclohexylmethane diisocyanate, 1,4-cyclohexane diisocyanate, methylcyclohexylene diisocyanate and 1,3-bis(isocyanatemethyl)cyclohexane.

As the aromatic polyisocyanate, examples include, but are not limited to, tolylene diisocyanate, 2,2'-diphenylmethane diisocyanate, 2,4'-diphenylmethane diisocyanate, 4,4'-diphenylmethane diisocyanate, 4,4'-dibenzyl diisocyanate, 1,5-naphthylene diisocyanate, xylylene diisocyanate, 1,3-phenylene diisocyanate, 1,4-phenylene diisocyanate, dialkyldiphenylmethane diisocyanate, tetraalkyldiphenylmethane diisocyanate, and $\alpha,\alpha,\alpha,\alpha$-tetramethylxylylene diisocyanate.

The polyamic acid, which is a precursor of polyimide-based resin, is obtained by the reaction of a diamine component with a tetracarboxylic acid component such as a tetracarboxylic dianhydride, tetracarboxylic acid and tetracarboxylic acid derivative (e.g., tetracarboxylic acid diester).

As the tetracarboxylic acid component, examples include, but are not limited to, benzophenonetetracarboxylic dianhydride, 4,4'-oxydiphthalic anhydride, pyromellitic acid, its dianhydride, 3,3',4,4'-biphenyltetracarboxylic acid and its dianhydride.

As the diamine component, examples include, but are not limited to, p-phenylenediamine and 4,4'-diaminodiphenylether.

As the binder resin containing a functional group reactive with an amino group, examples also include, but are not limited to, a modified resin modified by the functional group. As such a modified resin, examples include, but are not limited to, a modified polyolefin-based resin such as an acid-modified polyolefin-based resin and an epoxy-modified polyolefin-based resin.

For example, when a modified polyolefin-based resin in a melted state is mixed with the hollow particles of the present disclosure, they are mixed in a high-temperature state. Accordingly, the reaction of the functional group of the modified polyolefin-based resin with the amino group of the hollow particles is promoted by heat to form a crosslink.

In combination with the binder resin containing the above-described functional group, the resin composition of the present disclosure may further contain a binder resin free of the above-described functional group, to the extent that does not impair the effects of the present disclosure. The binder resin free of the functional group can be appropriately selected from known thermosetting resins, known thermoplastic resins, known thermoplastic elastomers and so on, for example. More specifically, examples include, but are not limited to, polyethylene, polypropylene, acrylonitrile-butadiene-styrene copolymer (ABS resin), styrene-isoprene-styrene block copolymer (SIS), styrene-butadiene-styrene block copolymer (SBS), styrene-ethylene propylene-styrene block copolymer (SEPS) and styrene-ethylene butylene-styrene block copolymer (SEBS).

From the viewpoint of improving the adhesion between the binder resin and the hollow particles, the content of the binder resin free of the functional group is preferably 90 parts by mass or less, and more preferably 50 parts by mass or less, with respect to 100 parts by mass of the binder resin containing the functional group.

In the total solid content (100% by mass) of the resin composition, the content of the binder resin is not particularly limited. From the viewpoint of improving mechanical strength, the lower limit of the content of the binder resin is preferably 50% by mass or more, and more preferably 60% by mass or more. On the other hand, the upper limit is preferably 95% by mass or less, and more preferably 90% by mass or less, from the viewpoint of sufficiently containing the hollow particles.

[Curing agent]

The resin composition of the present disclosure may further contain a curing agent for curing the binder resin.

The curing agent may be appropriately selected from known curing agents, depending on the type of the binder resin, and it is not particularly limited. As the curing agent for curing the epoxy-based resin, examples include, but are not limited to, amines, acid anhydrides, imidazoles, thiols, phenols, naphthols, benzoxazines, cyanate esters and carbodiimides.

The content of the curing agent is not particularly limited. For example, with respect to 100 parts by mass of the binder resin, the content of the curing agent may be from 5 parts by mass to 120 parts by mass.

[Catalyst]

The resin composition of the present disclosure may further contain a catalyst for curing the binder resin.

The catalyst used for curing the polyimide-based resin, that is, the catalyst used for imidization reaction may be a combination of an organic acid anhydride and an organic base, for example. As the organic acid anhydride, examples include, but are not limited to, acetic anhydride, propionic anhydride, maleic anhydride and phthalic anhydride. As the organic base, examples include a heterocyclic compound such as pyridine and picoline, and a tertiary amine such as triethylamine and N,N-dimethylaniline.

The content of the catalyst is appropriately adjusted depending on the type of the binder resin, and it is not particularly limited.

[Hollow particles]

The hollow particles contained in the resin composition of the present disclosure are the above-described hollow particles of the present disclosure.

In the resin composition of the present disclosure, the content of the hollow particles is not particularly limited. In the total solid content (100% by mass) of the resin composition, the content of the hollow particles is preferably from 5% by mass to 50% by mass, more preferably from 5% by mass to 30% by mass, and still more preferably from 5% by mass to 15% by mass. When the content of the hollow particles is equal to or more than the lower limit value, effects such as a decrease in permittivity, weight reduction, heat insulation and so on of the resin composition can be improved. When the content of the hollow particles is equal to or less than the upper limit value, the binder resin can be sufficiently contained in the resin composition. Accordingly, a deterioration in the properties of the obtained molded body can be suppressed, and the mechanical strength of the obtained molded body can be improved.

From the viewpoint of improving the adhesion between the binder resin and the hollow particles, with respect to 100 parts by mass of the binder resin containing a functional group reactive with an amino group, the content of the hollow particles is not particularly limited, and it is preferably 10 parts by mass or more, and more preferably 20 parts by mass or more. On the other hand, the content of the hollow particles is preferably 50 parts by mass or less, and more preferably 40 parts by mass or less.

[Other additives]

As needed, the resin composition of the present disclosure may further contain a solvent and additives such as a compatibilizer, a UV absorber, a colorant, a thermal stabilizer, a filler and a flame retardant, to the extent that does not impair the effects of the present disclosure.

The resin composition of the present disclosure may further contain organic or inorganic reinforcing fibers such as carbon fibers, glass fibers, aramid fibers and polyethylene fibers, when it is formed into the resin molded body.

For example, the resin composition of the present disclosure is obtained by mixing the hollow particles of the present disclosure, the binder resin, and those which are added as needed, such as the additives and the solvent. When the binder resin in the resin composition of the present disclosure is the thermoplastic resin, the thermoplastic resin may be melted and then mixed with the hollow particles of the present disclosure and the additives added as needed by melt-kneading.

The resin composition of the present disclosure may be the resin composition before the amino group on the surface of the hollow particles is reacted with the functional group of the binder resin to form a crosslink. In this case, in the process of forming the resin composition of the present disclosure into a cured product or a molded body, the amino group on the surface of the hollow particles is reacted with the functional group of the binder resin to form a crosslink, thereby imparting excellent adhesion to the interface between the binder resin and the hollow particles.

Also, the resin composition of the present disclosure can impart excellent adhesion to the interface between the binder resin and the hollow particles, even when the resin composition contains a component other than the hollow particles of the present disclosure or the binder resin containing the functional group. The reason is presumed as follows: due to high affinity of the functional group of the binder resin and the amino group on the surface of the hollow particles for each other, in the resin composition, the binder resin containing the functional group tends to gather around the hollow particles, and the functional group can be cross-linked to the amino group on the surface of the hollow particles.

The method for reacting and cross-linking the amino group on the surface of the hollow particles and the functional group of the binder resin may be, for example, heating the resin composition. The heating may be any of the following heating methods, for example: when the binder resin is a thermoplastic resin, heating for decreasing the melt viscosity of the resin and molding the resin; when the binder resin is a thermosetting resin, heating for curing the resin; and when the resin composition contains a solvent, heating for drying the resin composition. The heating condition is appropriately controlled depending on the purpose of the heating, and it is not particularly limited. From the viewpoint of reacting the amino group of the hollow particles with the functional group of the binder resin, heating at a temperature of from 50°C to 300°C for a total of 1 hour to 24 hours, is preferred. Also, by mixing the hollow particles and the binder resin and then carrying out the curing reaction of the binder resin at room temperature, the amino group on the surface of the hollow particles can be reacted with the functional group of the binder resin to form a crosslink.

Also, the resin composition of the present disclosure may be a liquid resin composition. The binder resin contained in the liquid resin composition may be a liquid binder resin before being subjected to a curing reaction, may be dissolved or dispersed in the solvent, or may be a melted thermoplastic resin.

Also, the resin composition of the present disclosure may be a resin molded body obtained by molding the above-described liquid resin composition by a known method.

The resin molded body of the present disclosure contains the hollow particles derived from the hollow particles of the present disclosure and the binder resin. The shell of the hollow particles is cross-linked to the binder resin.

The binder resin contained in the resin molded body of the present disclosure is a solidified product. The binder resin as the solidified product is a resin solidified through or not through a chemical reaction, such as a resin cured by a curing reaction, a resin solidified by drying, and a resin solidified by cooling a thermoplastic resin. The resin molded body obtained by use of the above-described resin composition contains, as the binder resin, a cured resin product cured by using a curing agent, a polymerization initiator, a catalyst or the like as needed. In this case, the binder resin may contain a curing agent or the like. The resin molded body of the present disclosure obtained by melt-kneading the hollow particles of the present disclosure and the thermoplastic resin and molding the resulting mixture, contains a solidified product as the binder resin, which is the thermoplastic resin solidified by cooling.

In the resin molded body of the present disclosure, performances such as a decrease in permittivity, weight reduction and heat insulation are imparted by the hollow particles. Also, due to excellent adhesion between the binder resin and the hollow particles, a deterioration in resin properties is suppressed.

For example, the method for producing the resin molded body according to the present disclosure includes the following steps:

mixing the hollow particles of the present disclosure and the binder resin containing a functional group reactive with an amino group (hereinafter referred to as the first step),
solidifying the binder resin (hereinafter referred to as the second step), and
reacting the amino group of the hollow particles with the functional group of the binder resin (hereinafter referred to as the third step).

In the method for producing the resin molded body according to the present disclosure, the order of the first step, the second step and the third step is not particularly limited. For example, after the first step, the second step and the third step may be carried out. In this case, the order of the second step and the third step is not particularly limited. As far as technically possible, the second step and the third step may be simultaneously carried out. Also, for example, the second step may be carried out after the first step and the third step are simultaneously carried out.

In the first step, a mixture is prepared, which contains at least the hollow particles of the present disclosure and the binder resin containing a functional group reactive with an amino group. The first step may be a step of preparing the above-described resin composition of the present disclosure.

In the second step, the mixture obtained in the first step is solidified through or not through a chemical reaction, thereby solidifying the binder resin. When the binder resin is curable by a curing agent, a catalyst or the like, the curing agent, the catalyst or the like may be added in the second step. When the binder resin is a curable resin, the method for curing the curable resin is not particularly limited. As the method, examples include, but are not limited to, heating and light irradiation such as ultraviolet and electron beam. Also, the curable resin may be cured by adding a catalyst or the like to the resin and mixing them at room temperature.

In the third step, in the mixture obtained in the first step, a mixture obtained by adding a curing agent, a catalyst or the like thereto, or the solidified resin product obtained in the second step, the amino group of the hollow particles is reacted with the functional group of the binder resin, thereby crosslinking the shell of the hollow particles and the binder resin.

The third step may be carried out along with the binder resin curing reaction of the second step. For example, when the binder resin curing reaction and the reaction of the amino group of the hollow particles with the functional group of the binder resin proceed at normal temperature by the addition of the curing agent or the catalyst, the second step and the third step can be simultaneously carried out by curing the resin composition of the present disclosure after adding the curing agent or the catalyst to the resin composition. When the binder resin curing reaction and the reaction of the amino group of the hollow particles with the functional group of the binder resin proceed by heat, the second step and the third step can be simultaneously carried out by heating the resin composition of the present disclosure. When the thermoplastic resin is used as the binder resin, the kneading of the hollow particles and the thermoplastic resin and the molding of the mixture are carried out in a high-temperature environment. Accordingly, when the binder resin is the thermoplastic resin and the reaction of the amino group of the hollow particles with the functional group of the binder resin proceeds by heat, the third step may be simultaneously carried out with the first or second step.

The resin molded body of the present disclosure may be a resin molded body obtained by forming the above-described liquid resin composition of the present disclosure into a resin molded body by a known method. In the process of forming the liquid resin composition into a resin molded body, generally, the above-described heating or the above-described curing reaction at room temperature is carried out. As a result of the curing reaction, the amino group of the hollow particles is reacted with the functional group of the binder resin to form a crosslink, and the surface of the hollow particles is cross-linked to the binder resin. Accordingly, excellent adhesion of the interface between the binder resin and the hollow particles is obtained.

For example, the resin molded body of the present disclosure can be obtained as follows: the liquid resin composition which is obtained by incorporating the hollow particles and so on to the liquid binder resin before being subjected to a curing reaction, or the liquid resin composition obtained by dissolving or dispersing the components in the solvent, is applied on the support, and the applied liquid resin composition is dried and cured as needed, thereby obtaining the resin molded body of the present disclosure.

As the material of the support, examples include, but are not limited to, a resin such as polyethylene terephthalate and polyethylene naphthalate, and a metal such as copper, aluminum, nickel, chromium, gold and silver. The surface of these supports may be coated with a release agent.

The liquid resin composition can be applied by a known method. As the method, examples include, but are not limited to, dip coating, roll coating, curtain coating, die coating, slit coating and gravure coating.

Also, the resin molded body can be obtained by impregnating the substrate with the liquid resin composition and drying and curing the liquid resin composition, as needed. As the substrate, examples include, but are not limited to, inorganic fibers such as carbon fibers, glass fibers, metal fibers and ceramic fibers, and organic synthetic fibers such as polyamide fibers, polyester-based fibers, polyolefin-based fibers and novoloid fibers. Of them, glass fibers (glass cloth) are preferred. The form of the substrate is not limited and may be a woven fabric, a non-woven fabric or the like.

When the liquid resin composition contains the solvent, the liquid resin composition is preferably dried after the application or impregnation. The drying temperature is preferably a temperature at which the binder resin is not cured, and it is generally 20°C or more and 200°C or less, and preferably 30°C or more and 150°C or less. The drying time is generally 30 seconds or more and 1 hour or less, and preferably 1 minute or more and 30 minutes or less.

The curing reaction of the resin composition is not particularly limited, and it is performed by a method based on the type of the binder resin. When the resin composition contains the binder resin which is curable by heating, the heating temperature for the curing reaction is not particularly limited, and it is appropriately adjusted depending on the type of the resin. The heating temperature is generally 30°C or more and 400°C or less, preferably 70°C or more and 300°C or less, and more preferably 100°C or more and 200°C or less. The curing time is 5 minutes or more and 5 hours or less, and preferably 30 minutes or more and 3 hours or less. The heating method is not particularly limited. For example, an electric oven may be used.

The liquid binder resin before being subjected to a curing reaction and the binder resin to be dissolved or dispersed in the solvent, may be a thermosetting or thermoplastic resin.

Also, the resin molded body may be obtained by molding the resin composition containing the thermoplastic resin as the binder resin, into a desired form by a known molding method such as extrusion molding, injection molding, press molding and compression molding. The temperature of the melt-kneading is not particularly limited and is only required to be a temperature at which the thermoplastic resin used can be melted. The melt-kneading can be carried out by a known method, and it is not particularly limited. For example, it can be carried out by use of a kneader such as a uniaxial or biaxial kneader.

The form of the resin molded body is not particularly limited and may be any kind of moldable form. The resin molded body can be in any form such as a sheet form, a film form, a plate form, a tube form, and various kinds of other three-dimensional forms. When the resin molded body contains fibers, the fibers in the resin molded body may be in a non-woven fabric form. Also, when the resin molded body contain fibers, the resin molded body may be a molded body of a resin composition obtained by adding the hollow particles of the present disclosure to a fiber reinforced plastic containing the resin and fibers as described above.

As the applications of the resin composition and resin molded body of the present disclosure, examples include, but are not limited to, those in which the resin composition or the resin molded body can be used, among the above-mentioned applications of the hollow particles of the present disclosure.

Examples

Hereinbelow, the present disclosure is described more specifically using examples and comparative examples. However, the present disclosure is not limited to these examples. Also, "part(s)" and "%" are on a mass basis unless otherwise specified.

[Example 1]

(1) Mixture liquid preparation step

First, the following materials were mixed to produce an oil phase.

Divinylbenzene: 83.7 parts
Ethylvinylbenzene: 3.5 parts
t-Butylperoxy diethylacetate (oil-soluble polymerization initiator): 2.3 parts
Hydrophobic solvent: Heptane (solubility in water at 20°C: 2.2 mg/L, boiling point: 98.4°C) 155.7 parts

Next, in a stirring tank, an aqueous solution in which 13.7 parts of sodium hydroxide (an alkali metal hydroxide) was dissolved in 55 parts of deionized water, was gradually added under stirring to an aqueous solution in which 19.6 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 10 parts). The dispersion was used as an aqueous phase.
The obtained aqueous phase and oil phase were mixed, thereby preparing a mixture liquid.

(2) Suspension step

The mixture liquid obtained in the mixture liquid preparation step was suspended with an emulsifying disperser (product name: HOMOMIXER, manufactured by: PRIMIX Corporation) at a rotational frequency of 4,000 rpm for one minute, thereby preparing a suspension in which droplets of a monomer composition including the hydrophobic solvent were dispersed in water.

(3) Precursor composition preparation step

In a nitrogen atmosphere, the temperature of the suspension obtained in the suspension step was increased to 80°C. The suspension was stirred for one hour in a temperature condition of 80°C, thereby performing the first polymerization reaction. The polymerization conversion rate at the time of the end of the first polymerization reaction was 50%.
Next, as a monomer for amino group introduction, 12.8 parts of 2-(tert-butylamino)ethyl methacrylate (t-BAEMA) (solubility in water at 20°C: 18 g/L) was added to the stirring tank. In a nitrogen atmosphere, the content of the tank was stirred for 23 hours in a temperature condition of 80°C to perform the second polymerization reaction. By the second polymerization reaction, a precursor composition was obtained, which was a slurry solution in which precursor particles including the hydrophobic solvent and having an amino group on the surface were dispersed in water.

(4) Washing step and solid-liquid separation step

The precursor composition obtained in the precursor composition preparation step was washed with dilute sulfuric acid (25°C, 10 minutes) to bring the pH of the composition to 5.5 or less. Next, water was separated therefrom by filtration. Then, 200 parts of deionized water was added to reslurry the resultant, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including the hydrophobic solvent.

(5) Solvent removal step

The precursor particles obtained in the solid-liquid separation step were subjected to heating treatment for 12 hours with a vacuum dryer in a vacuum condition at 200°C, thereby removing the hydrophobic solvent from the particles. Accordingly, the hollow particles of Example 1 were obtained. From the scanning electron microscopy observation result and void ratio of the obtained hollow particles, the particles were confirmed to be spherical and to have a hollow portion.

[Example 2]

The hollow particles of Example 2 were produced in the same manner as Example 1, except the following.
In "(1) Mixture liquid preparation step", the amount of the added divinylbenzene was changed to 71.4 parts, and the amount of the added ethylvinylbenzene was changed to 3.0 parts.
In "(3) Precursor composition preparation step", the amount of the added t-BAEMA was changed from 12.8 parts to 25.6 parts.

[Example 3]

The hollow particles of Example 3 were produced in the same manner as Example 1, except that the above-described "(1) Mixture liquid preparation step" was changed as follows, and in "(3) Precursor composition preparation step", the amount of the added t-BAEMA was changed from 12.8 parts to 22.0 parts.
The mixture liquid preparation step of Example 3 was carried out as follows.
First, the following materials were mixed to produce an oil phase.

   Ethylene glycol dimethacrylate: 78.0 parts
   2,2'-Azobis(2,4-dimethylvaleronitrile) (oil-soluble polymerization initiator): 2.3 parts
   Hydrophobic solvent: Cyclohexane 119.8 parts

Next, in a stirring tank, an aqueous solution in which 12.1 parts of sodium hydroxide (an alkali metal hydroxide) was dissolved in 55 parts of deionized water, was gradually added under stirring to an aqueous solution in which 17.1 parts of magnesium chloride (a water-soluble polyvalent metal salt) was dissolved in 225 parts of deionized water in a room temperature condition, thereby preparing a magnesium hydroxide (sparingly water-soluble metal hydroxide) colloidal dispersion (magnesium hydroxide: 4 parts). The dispersion was used as an aqueous phase.
The obtained aqueous phase and oil phase were mixed, thereby preparing a mixture liquid.

[Example 4]

The hollow particles of Example 4 were produced in the same manner as Example 1, except the following.
In "(1) Mixture liquid preparation step", the amount of the added divinylbenzene was changed to 91.2 parts, and the amount of the added ethylvinylbenzene was changed to 3.8 parts.
In "(3) Precursor composition preparation step", the amount of the added t-BAEMA was changed from 12.8 parts to 5.0 parts; the first polymerization reaction time was changed from 1 hour to 0.5 hours; and the second polymerization reaction time was changed from 23 hours to 23.5 hours.

[Example 5]

The hollow particles of Example 5 were produced in the same manner as Example 4, except that the first polymerization reaction time was changed from 0.5 hours to 4 hours, and the second polymerization reaction time was changed from 23.5 hours to 20 hours.

[Example 6]

The hollow particles of Example 6 were produced in the same manner as Example 1, except that in "(3) Precursor composition preparation step", the first polymerization reaction time was changed from 1 hour to 0.2 hours, and the second polymerization reaction time was changed from 23 hours to 23.8 hours.

[Example 7]

The hollow particles of Example 7 were produced in the same manner as Example 1, except the following.
In "(1) Mixture liquid preparation step", the amount of the added divinylbenzene was changed to 81.4 parts; the amount of the added ethylvinylbenzene was changed to 3.4 parts; and the amount of the added heptane was changed to 204 parts.
In "(3) Precursor composition preparation step", the amount of the added t-BAEMA was changed from 12.8 parts to 15.2 parts; the first polymerization reaction time was changed from 1 hour to 1.5 hours; and the second polymerization reaction time was changed from 23 hours to 22.5 hours.

[Example 8]

The hollow particles of Example 8 were produced in the same manner as Example 3, except that in "(3) Precursor composition preparation step", the first polymerization reaction time was changed from 1 hour to 0.1 hours, and the second polymerization reaction time was changed from 23 hours to 23.9 hours.

[Example 9]

The hollow particles of Example 9 were produced in the same manner as Example 3, except the following.
In "(1) Mixture liquid preparation step", the amount of the added ethylene glycol dimethacrylate was changed to 90.0 parts.
In "(3) Precursor composition preparation step", the amount of the added t-BAEMA was changed from 22.0 parts to 10.0 parts; the first polymerization reaction time was changed from 1 hour to 0.1 hours; and the second polymerization reaction time was changed from 23 hours to 23.9 hours.

[Example 10]

The hollow particles of Example 10 were produced in the same manner as Example 3, except the following.
In "(1) Mixture liquid preparation step", the amount of the added ethylene glycol dimethacrylate was changed to 95.0 parts.
In "(3) Precursor composition preparation step", the amount of the added t-BAEMA was changed from 22.0 parts to 5.0 parts; the first polymerization reaction time was changed from 1 hour to 4 hours; and the second polymerization reaction time was changed from 23 hours to 20 hours.

[Example 11]

The hollow particles of Example 11 were produced in the same manner as Example 1, except that in "(3) Precursor composition preparation step", 12.8 parts of diallylamine (solubility in water at 20°C: 90 g/L) was added instead of 12.8 parts of t-BAEMA; the first polymerization reaction time was changed from 1 hour to 0.15 hours; and the second polymerization reaction time was changed from 23 hours to 23.85 hours.

[Example 12]

The hollow particles of Example 12 were produced in the same manner as Example 3, except that in "(3) Precursor composition preparation step", 22 parts of diallylamine was added instead of 22.0 parts of t-BAEMA; the first polymerization reaction time was changed from 1 hour to 3 hours; and the second polymerization reaction time was changed from 23 hours to 21 hours.

[Example 13]

The hollow particles of Example 13 were produced in the same manner as Example 1, except the following.
In "(1) Mixture liquid preparation step", 25.7 parts of divinylbenzene, 18.0 parts of ethylvinylbenzene, 22.2 parts of ethylene glycol dimethacrylate and 20.0 parts of A-TMMT were used instead of 83.7 parts of divinylbenzene and 3.5 parts of ethylvinylbenzene; the amount of the added t-butylperoxy diethylacetate was changed from 2.3 parts to 2.0 parts; and 92.3 parts of hexane was used instead of 155.7 parts of heptane.
In "(3) Precursor composition preparation step", the first polymerization reaction time was changed from 1 hour to 0.2 hours, and the second polymerization reaction time was changed from 23 hours to 23.8 hours.

[Comparative Example 1]

The hollow particles of Comparative Example 1 were produced in the same manner as Example 1, except the following.
In "(1) Mixture liquid preparation step", the amount of the added divinylbenzene was changed to 96.0 parts, and the amount of the added ethylvinylbenzene was changed to 4.0 parts.
In "(3) Precursor composition preparation step", t-BAEMA was not added.

[Comparative Example 2]

The hollow particles of Comparative Example 2 were produced in the same manner as Example 2, except that in "(1) Mixture liquid preparation step", 25.6 parts of t-BAEMA was added to the oil phase, and in "(3) Precursor composition preparation step", t-BAEMA was not added.

[Comparative Example 3]

The hollow particles of Comparative Example 3 were produced in the same manner as Example 1, except the following.
In "(1) Mixture liquid preparation step", the amount of the added divinylbenzene was changed to 95.0 parts, and the amount of the added ethylvinylbenzene was changed to 4.0 parts.
In "(3) Precursor composition preparation step", the amount of the added t-BAEMA was changed from 12.8 parts to 1.0 parts; the first polymerization reaction time was changed from 1 hour to 4 hours; and the second polymerization reaction time was changed from 23 hours to 20 hours.

[Comparative Example 4]

The hollow particles of Comparative Example 4 were produced by the following method. The following method corresponds to Example 1 in Patent Document 2 (JP-A No. 2006-89648).
First, the following materials were mixed to produce an oil phase.

Glycidyl methacrylate: 50 parts
2,2'-Azobis(isobutyronitrile) (oil-soluble polymerization initiator): 1.7 parts
Hydrophobic solvent: Heptane 115 parts

Next, in a stirring tank, 3.3 parts of sodium dodecylbenzene sulfonate and 3.3 parts of acetyl alcohol were added to 666.7 parts of deionized water in a room temperature condition, thereby preparing an aqueous solution. The aqueous solution was used as an aqueous phase.
The obtained aqueous phase and oil phase were mixed, thereby preparing a mixture liquid.
The obtained mixture liquid was stirred by an ultrasonic homogenizer for 60 minutes to obtain a dispersion. In a nitrogen atmosphere, the obtained dispersion was stirred for 4 hours in a temperature condition of 60°C, thereby carrying out a polymerization reaction. Next, 50 parts of diethylenetriamine was added as a crosslinking agent, and a crosslinking reaction was carried out for 6 hours in a temperature condition of 80°C. Then, the dispersion after the crosslinking reaction was cooled to room temperature to obtain a slurry.
The obtained slurry was dialyzed and filtered to obtain particles that included the hydrophobic solvent. Next, the particles were subjected to vacuum drying to remove the included hydrophobic solvent from the particles, thereby obtaining the hollow particles of Comparative Example 4.

<Measurement of polymerization conversion rate>

In the precursor composition preparation step of Examples 1 to 13 and Comparative Example 3, 50 g of the suspension just before adding the monomer for amino group introduction, was taken. After the pH of the taken suspension was adjusted to 5 to 6, the suspension was subjected to pressure filtration, thereby separating a polymer precipitate (containing water and the hydrophobic solvent) from the suspension. By drying the precipitate at 200°C for 2 hours, water and the hydrophobic solvent were removed therefrom. Then, the mass of the polymer precipitate was weighed precisely and used as the mass of the monomer for skeleton formation contained in the suspension (the total mass of the polymerized monomer for skeleton formation and the unreacted monomer for skeleton formation). The polymer precipitate was dispersed in ethyl acetate to obtain a dispersion, and 2 μL of the obtained dispersion was collected as a measurement sample. Next, the mass of the unreacted monomer for skeleton formation in the measurement sample was quantified by gas chromatography (GC) in the following condition, and the mass of the unreacted monomer for skeleton formation contained in the suspension was calculated. The polymerization conversion rate was calculated by the following formula (C) from the mass of the monomer for skeleton formation contained in the suspension (that is, the mass of the polymer precipitate) and the mass of the unreacted monomer for skeleton formation contained in the suspension (that is, the mass of the unreacted monomer for skeleton formation measured by GC).
In the case where the polymer precipitate was not produced, after the pH of the suspension was adjusted to 5 to 6, the suspension was separated into two phases, and the oil phase was isolated. Next, 2 μL of the obtained oil phase was collected as a measurement sample. Next, each of the polymerized and unreacted monomers for skeleton formation in the measurement sample, was quantified by gas chromatography (GC) in the following condition, and the mass of each of the polymerized and unreacted monomers for skeleton formation contained in the oil phase, was calculated. At this time, by dividing the nonreactive included solvent (hydrophobic solvent) contained in the oil phase, only the mass of the unreacted monomer for skeleton formation contained in the oil phase could be calculated. The polymerization conversion rate was calculated by the following formula (C) from the mass of the monomer for skeleton formation contained in the suspension (that is, the total mass of the polymerized monomer for skeleton formation and unreacted monomer for skeleton formation contained in the suspension) and the mass of the unreacted monomer for skeleton formation contained in the suspension.

Polymerization conversion rate (% by mass) = 100-( [Mass of the unreacted monomer for skeleton formation] / [Mass of the monomer for skeleton formation contained in the suspension] ) ×100     Formula (C)

(Condition of GC)

    Column: TC-WAX (0.25 mm × 30 m)
    Column temperature: 80°C
    Injection temperature: 200°C
    FID detection side temperature: 200°C

[Evaluation]

The hollow particles obtained in the examples and the comparative examples were measured and evaluated as follows. The results are shown in Tables 1 to 3.

1. Density and void ratio of the hollow particles

1-1. Measurement of the apparent density of the hollow particles

First, approximately 30 $cm^3$ of the hollow particles were introduced into a measuring flask with a volume of 100 $cm^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/$cm^3$) of the hollow particles was calculated by the following formula (I).

Apparent density $D_1$ = [Mass of the hollow particles] / (100-[Mass of the isopropanol] / [Specific gravity of the isopropanol at the measuring temperature])     Formula (I)

1-2. Measurement of the true density of the hollow particles

The hollow particles were pulverized in advance; approximately 10 g of the pulverized hollow particles were introduced into a measuring flask with a volume of 100 $cm^3$; and the mass of the introduced pulverized particles was precisely weighed.
Then, similarly to the measurement of the apparent density mentioned above, isopropanol was added to the measuring flask; the mass of the isopropanol was precisely weighed; and the true density $D_0$ (g/$cm^3$) of the hollow particles was calculated by the following formula (II).

True density $D_0$ = [Mass of the pulverized hollow particles] / (100-[Mass of the isopropanol] / [Specific gravity of the isopropanol at the measuring temperature])

1-3. Calculation of void ratio

The void ratio of the hollow particles was calculated by the following formula (III) from the apparent density $D_1$

and the true density $D_0$.

Void ratio (%) = 100-(Apparent density $D_1$/True density $D_0$)×100

2. Measurement of volume average particle diameter (Dv) and number average particle diameter (Dn), and calculation of particle size distribution (Dv/Dn)

The volume average particle diameter (Dv) and number average particle diameter (Dn) of the hollow particles were measured with a particle size distribution measuring device (product name: MULTISIZER 4e, manufactured by: Beckman Coulter, Inc.), and the particle size distribution (Dv/Dn) was calculated. The measurement condition is as follows.

Aperture diameter: 50 um
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

3. Measurement of amine amount

3-1. Measurement of amine value

For the hollow particles, in accordance with JIS K 7237, the amine value was measured by potentiometric titration. The details of the measurement method are as follows.
A sample solution containing the hollow particles was obtained by adding 2 g of the hollow particles to 65 mL of a mixed solution of 2-nitrotoluene and acetic acid (2-nitrotoluene and acetic acid at a volume ratio of 9:4) and mixing them. Potentiometric titration of the sample solution containing the hollow particles was carried out with potentiometric titrator AT-710 (product name, manufactured by Kyoto Electronics Manufacturing Co., Ltd.) using a 0.1 mol/L perchloric acid-acetic acid solution as a titrant. An inflection point thus obtained was defined as the end point. Besides this main test, a blank test of a solution free of the hollow particles was carried out, and the amine value of the hollow particles was calculated by the following formula.

$$\mathtt{Amine~value~(mmol/g)~=~(V1-V0)\times N\times f/S}$$

S: Mass of the sample solution
V1: Titrant amount (mL) in the main test
V0: Titrant amount (mL) in the blank test
N: Concentration (mol/L) of the titrant
f: Factor of the titrant

3-2. Measurement of specific surface area

The specific surface area ($m^2$/g) of the hollow particles was obtained from the above-measured volume average particle diameter and apparent density $D_1$ of the hollow particles by the formula (B) described above.

3-3. Calculation of amine amount

The amine amount per unit area ($\mu$mol/$m^2$) of the hollow particles was calculated from the amine value and specific surface area of the hollow particles by the formula (A) described above. According to Rule B of JIS Z 8401:1999, values rounded to two decimal places were used as the amine value and the specific surface area. The amine amount was a value rounded to two decimal places. As the amine value used in the formula (A), a value expressed in "umol/g" unit was used.

4. Measurement of the relative permittivity (Dk) and dielectric dissipation factor (Df) of the hollow particles

Using a measuring device (manufactured by: AET Inc., model: ADMS01Nc), the relative permittivity and dielectric dissipation factor of the hollow particles were measured at a frequency of 1 GHz and at room temperature (25°C).

5. Adhesion to resin

First, 0.2 g of the hollow particles were added to 0.8 g of a base resin (4,4'-isopropylidenediphenol and 1-chloro-2,3-epoxypropane polycondensate (bisphenol A-type liquid epoxy resin)) of an epoxy-based adhesive (product name: QUICK 5, manufactured by Konishi Co., Ltd.) Then, they were uniformly mixed. In addition, 0.9 g of a hardener (a mixture of polythiol (curing agent), polyamideamine (curing agent), tertiary amine (curing agent) and silica) was added thereto. Then, they were mixed to obtain a resin composition.

The obtained resin composition was thinly extended to a thickness of about 2 mm. The extended resin composition was left for 24 hours at room temperature to be cured, thereby obtaining a molded body.

The obtained molded body was cut, and the state of the interface between the hollow particles and the resin (the epoxy-based resin) on the cross-sections was observed by SEM. Then, 100 or more hollow particles were observed; the percentage of hollow particles causing cohesive failure was calculated; and the evaluation of adhesion was carried out based on the following criteria.

The hollow particles causing cohesive failure are hollow particles in the state that the particles are cracked along with the shell. As the adhesion of the interface between the hollow particles and the resin increases, cohesive failure is more likely to occur. In Examples 1 to 13, the shape of the hollow portion of the hollow particles causing cohesive failure was retained, while the shell of the hollow particles causing cohesive failure was cracked.

(Adhesion evaluation criteria)

A: Hollow particles causing cohesive failure were 90% or more.

B: Hollow particles causing cohesive failure were 70% or more and less than 90%.

C: Hollow particles causing cohesive failure were 50% or more and less than 70%.

D: Hollow particles causing cohesive failure were 20% or more and less than 50%.

E: Hollow particles causing cohesive failure were less than 20%.

[Table 1]

Table 1

| | | Example 1 | Example 2 | Example 3 | Example 4 | Example 5 |
|---|---|---|---|---|---|---|
| Monomer for skeleton formation | Divinvlbenzene | 83.7 | 71.4 | | 91.2 | 91.2 |
| | Ethvlvinvlbenzene | 3.5 | 3.0 | | 3.8 | 3.8 |
| | EGDMA | | | 78.0 | | |
| Monomer for amino group introduction | t-BAEMA | 12.8 | 25.6 | 22.0 | 5.0 | 5.0 |
| | Polymerization conversion rate (%) when added | 50 | 50 | 80 | 40 | 80 |
| Hydrophobic solvent | Heptane | 155.7 | 155.7 | | 155.7 | 155.7 |
| | Cyclohexane | | | 119.8 | | |

(continued)

| | | Example 1 | Example 2 | Example 3 | Example 4 | Example 5 |
|---|---|---|---|---|---|---|
| Polymerization initiator | t-Butylperoxy diethylacetate | 2.3 | 2.3 | | 2.3 | 2.3 |
| | 2,2'-Azobis(2,4-dimethylvaleronitrile) | | | 2.3 | | |
| Dispersion stabilizer | Mg(OH)$_2$ | 10 | 10 | 4 | 10 | 10 |
| Deionized water | | 280 | 280 | 280 | 280 | 280 |
| Properties of hollow particles | Void ratio (%) | 70 | 70 | 65 | 70 | 70 |
| | Dv ($\mu$m) | 3.82 | 4.28 | 10.21 | 3.40 | 3.40 |
| | Dv/Dn | 1.4 | 1.7 | 1.2 | 1.3 | 1.3 |
| | Amine amount ($\mu$mol/m$^2$) | 6.22 | 11.26 | 5.16 | 5.33 | 5.06 |
| | Dk (1 GHz) | 1.38 | 1.35 | 1.58 | 1.37 | 1.36 |
| | Df (1 GHz) | 1.33E-03 | 2.04E-03 | 1.16E-02 | 7.45E-04 | 7.38E-04 |
| | Adhesion to epoxy-based resin | A | A | B | B | C |

[Table 2]

Table 2

| | | Example 6 | Example 7 | Example 8 | Example 9 | Example 10 | Example 11 | Example 12 | Example 13 |
|---|---|---|---|---|---|---|---|---|---|
| Monomer for skeleton formation | Divinylbenzene | 83.7 | 81.4 | | | | 83.7 | | 25.7 |
| | Ethylvinylbenzene | 3.5 | 3.4 | | | | 3.5 | | 18.0 |
| | EGDMA | | | 78.0 | 900 | 95.0 | | 78.0 | 22.2 |
| | A-TMMT | | | | | | | | 200 |
| Monomer for amino group introduction | t-BAEMA | 12.8 | 15.2 | 22.0 | 100 | 50 | | | 12.8 |
| | Diallylamine | | | | | | 12.8 | 22.0 | |
| | Polymerization conversion rate (%) when added | 15 | 60 | 30 | 5 | 90 | 15 | 70 | 20 |
| Hydrophobic solvent | Heptane | 155.7 | 204 | | | | 155.7 | | |
| | Hexane | | | | | | | | 92.3 |
| | Cyclohexane | | | 119.8 | 119.8 | 119.8 | | 119.8 | |
| Polymerization initiator | t-Butylperoxy diethylacetate | 2.3 | 2.3 | | | | 2.3 | | 2.0 |
| | 2,2'-Azobis(2,4-dimethylvaleronitrile) | | | 2.3 | 2.3 | 2.3 | | 2.3 | |
| Dispersion stabilizer | $Mg(OH)_2$ | 10 | 10 | 4 | 4 | 4 | 10 | 4 | 4 |
| Deionized water | | 280 | 280 | 280 | 280 | 280 | 280 | 280 | 280 |
| Properties of hollow particles | Void ratio (%) | 70 | 75 | 65 | 65 | 65 | 70 | 65 | 65 |
| | Dv ($\mu$m) | 3.45 | 3.1 | 10.15 | 10.24 | 10.05 | 3.12 | 10.11 | 1005 |
| | Dv/Dn | 1.4 | 1.4 | 1.2 | 1.2 | 1.3 | 1.4 | 1.2 | 1.8 |
| | Amine amount ($\mu$mol/m$^2$) | 6.50 | 6.52 | 11.31 | 6.67 | 5.54 | 5.97 | 508 | 5.91 |
| | Dk (1 GHz) | 1.37 | 1.31 | 1.55 | 1.53 | 1.51 | 1.38 | 1.53 | 152 |
| | Df (1 GHz) | 1.55E-03 | 1.30E-03 | 1.21E-02 | 1.11E-02 | 1.03E-02 | 1.21E-03 | 1.22E-02 | 5.81E-03 |
| | Adhesion to epoxy-based resin | A | A | A | B | C | B | B | A |

[Table 3]

Table 3

|  |  | Comparative Example 1 | Comparative Example 2 | Comparative Example 3 | Comparative Example 4 |
|---|---|---|---|---|---|
| Monomer for skeleton formation | Divinvlbenzene | 96.0 | 71.4 | 95.0 |  |
|  | Ethylvinylbenzene | 4.0 | 3.0 | 4.0 |  |
|  | t-BAEMA |  | 25.6 |  |  |
|  | GMA |  |  |  | 50 |
| Monomer for amino group introduction | t-BAEMA |  |  | 1.0 |  |
|  | Polymerization conversion rate (%) when added |  |  | 80 |  |
| Crosslinking agent | Diethylenetriamine |  |  |  | 50 |
| Hydrophobic solvent | Heptane | 155.7 | 155.7 | 155.7 | 115 |
| Polymerization initiator | t-Butylperoxy diethylacetate | 2.3 | 2.3 | 2.3 |  |
|  | AIBN |  |  |  | 1.7 |
| Dispersion stabilizer | Mg(OH)$_2$ | 10 | 10 | 10 |  |
|  | Sodium dodecylbenzene sulfonate |  |  |  | 3.3 |
|  | Acetyl alcohol |  |  |  | 3.3 |
| Deionized water |  | 280 | 280 | 280 | 667 |
| Properties of hollow particles | Void ratio (%) | 70 | 70 | 70 | 73 |
|  | Dv ($\mu$m) | 3.81 | 3.56 | 3.50 | 0.046 |
|  | Dv/Dn | 1.4 | 1.4 | 1.4 | 1.2 |
|  | Amine amount ($\mu$mol/m$^2$) | - | 4.65 | 3.87 | 3.68 |
|  | Dk (1 GHz) | 1.36 | 1.36 | 1.37 | 1.58 |
|  | Df (1 GHz) | 7.88E-04 | 2.02E-03 | 7.23E-04 | 1.06E-02 |
|  | Adhesion to epoxy-based resin | E | D | D | D |

Tables 1 to 3 show the amount (parts by mass) of the added materials and the measurement or evaluation results.
In Tables 1 to 3, for simplification, the dielectric dissipation factor values are expressed by using the exponent notation defined in JIS X 0210. For example, "$1.33 \times 10^{-3}$" is expressed as "1.33E-03".
The meaning of the abbreviations shown in Tables 1 to 3 are as follows.

EGDMA: Ethylene glycol dimethacrylate

t-BAEMA: 2-(Tert-butylamino)ethyl methacrylate

A-TMMT: Pentaerythritol tetraacrylate

GMA: Glycidyl methacrylate

AIBN:2,2'-Azobis(isobutyronitrile)

[Consideration]

In Comparative Example 1, the hollow particles were produced without the addition of the monomer for amino group introduction in the precursor composition preparation step. Accordingly, the obtained hollow particles had no amino group on the surface thereof, and the hollow particles were poor in adhesion to resin.

In Comparative Example 2, in the precursor composition preparation step, the monomer for amino group introduction was not added, and t-BAEMA was used as the monomer for skeleton formation. As a result, the amine amount of the obtained hollow particles was insufficient, and the hollow particles were poor in adhesion to resin. The reason is presumed as follows: in Comparative Example 2, out of the monomer units derived from t-BAEMA, only a small amount thereof was exposed on the shell surface, and the amine amount was insufficient, accordingly. The dielectric property of the hollow particles of Comparative Example 2 was the same level as that of the hollow particles of Example 2. Accordingly, it was revealed that the dielectric property in the case where amino groups exist on the shell surface is the same level as the dielectric property in the case where amino groups exist in the interior of the shell.

In Comparative Example 3, in the precursor composition preparation step, t-BAEMA was added as the monomer for amino group introduction. However, since the amount of the added t-BAEMA was small, the amine amount of the obtained hollow particles was insufficient, and the adhesion of the hollow particles to resin was poor.

In Comparative Example 4, after the glycidyl methacrylate polymerization, the obtained polymer was crosslinked by use of the diethylenetriamine, thereby forming the shell. As a result, the amine amount of the obtained hollow particles was insufficient, and the adhesion of the hollow particles to resin was poor. The reason is thought as follows: since most of the amino groups of the diethylenetriamine used in Comparative Example 4, were used for the reaction with the epoxy groups of the glycidyl methacrylate, sufficient amounts of amino groups did not exist on the surface of the hollow particles.

Meanwhile, the hollow particles obtained in Examples 1 to 13 were excellent in adhesion to resin, since the amine amount per unit area was 5.00 $\mu$mol/m$^2$ or more, and they had sufficient amounts of amino groups on the particle surface.

In Examples 1 to 13, sufficient amounts of amino groups could be introduced to the particle surface. The reason is considered as follows: in the precursor composition preparation step, when the polymerization conversion rate of the monomer for skeleton formation was from 1% by mass to 99% by mass, a sufficient amount of the monomer for amino group introduction, which contained a radically polymerizable group and an amino group and which had appropriate water solubility, was added to further continue the polymerization reaction. Accordingly, sufficient amounts of amino groups could be introduced to the particle surface.

In Examples 1 to 10 and 13, it is presumed that since the t-BAEMA having a radically polymerizable group at one terminal thereof and an amino group at the other terminal via -O-(CH$_2$)$_2$-as the linking group, was used as the monomer for amino group introduction, the amino groups on the particle surface easily reacted with the functional group of the resin, thereby improving the adhesion of the hollow particles to resin.

In Examples 11 and 12, the diallylamine having several radically polymerizable groups and an amino group was used as the monomer for amino group introduction, and the amino group could be efficiently introduced to the particle surface, accordingly. A comparison between Examples 6 and 11 showed that the efficiency of amino group introduction was better in t-BAEMA than in diallylamine. This is presumed to be because a methacryloyl group has higher reactivity than an allyl group.

The hollow particles obtained in Examples 1 to 13 were spherical hollow particles having the hollow portion and had a high void ratio. The reason is presumed as follows. The crosslinkable monomer was adjusted to 60% by mass or more with respect to the total (100% by mass) of the monomer for skeleton formation and monomer for amino group introduction used to produce the hollow particles. Accordingly, in the suspension step, sufficient phase separation occurred between the shell-forming component and the hydrophobic solvent, and the shell with excellent strength was formed.

The dielectric property of the hollow particles tends to deteriorate as the content of the amino group-containing monomer units increases. Especially, as the content of the hydrocarbon monomer units in the polymer increases, the above-mentioned tendency tends to be more remarkable. In Examples 1 to 13, while minimizing the amount of the added monomer for amino group introduction, the amine amount per unit area could be sufficient. Accordingly, the hollow particles obtained in Examples 1 to 13 were those in which a deterioration in dielectric property was suppressed and which was balanced between dielectric property and adhesion to resin. Especially, the hollow particles of Examples 1, 2, 4 to 7 and 11, in all of which the shell contained many hydrocarbon monomer units, were low in relative permittivity and dielectric dissipation factor, and excellent in dielectric property. Especially, in Examples 4 and 5, since the amine amount was relatively small, the adhesion of the hollow particles to resin was relatively poor. However, since the percentage of the hydrocarbon monomer units was particularly high, the dielectric dissipation factor of the hollow particles was low, and the dielectric property thereof was particularly excellent.

As a result of examination of 3000 particles that were randomly selected from the hollow particles obtained in each of Examples 1 to 13, in all of Examples 1 to 13, the percentage of particles having a circularity of 0.85 or less was 10% by mass or less, and the percentage of particles having only one or two hollow portions was 90% by mass or more.

Reference Signs List

1. Aqueous medium
2. Low polarity material
4a. Hydrophobic solvent
4b. Material not containing hydrophobic solvent
6. Shell
7. Hollow portion
8. Droplet
9. Precursor particle
10. Hollow particle having a gas-filled hollow portion

**Claims**

1. Hollow particles which comprise a shell containing a resin and a hollow portion surrounded by the shell,

    wherein, as the resin, the shell contains a polymer which contains 60% by mass or more of crosslinkable monomer units;
    wherein the hollow particles have amino groups on a surface thereof; and
    wherein an amine amount per unit area of the hollow particles, which is obtained by the following formula (A) using an amine value of the hollow particles and a specific surface area of the hollow particles, is 5.00 $\mu$mol/m$^2$ or more:

    $$\text{Amine amount } (\mu\text{mol/m}^2) = \text{Amine value } (\mu\text{mol/g})/\text{Specific surface area } (\text{m}^2/\text{g}) \qquad \text{Formula (A).}$$

2. The hollow particles according to Claim 1, wherein the polymer contains amino group-containing monomer units, and the amino group-containing monomer units are derived from a monomer for amino group introduction, which contains a radically polymerizable group and an amino group.

3. The hollow particles according to Claim 2, wherein the amino groups on the surface of the hollow particles are the amino groups contained in the amino group-containing monomer units.

4. The hollow particles according to Claim 2 or 3, wherein, with respect to 100% by mass of all monomer units contained in the polymer, a content of the amino group-containing monomer units is 2% by mass or more and 40% by mass or less.

5. The hollow particles according to any one of Claims 1 to 4, wherein, with respect to 100% by mass of all monomer units contained in the polymer, a content of hydrocarbon monomer units is more than 50% by mass.

6. The hollow particles according to any one of Claims 1 to 4, wherein, with respect to 100% by mass of all monomer units contained in the polymer, a content of acrylic monomer units is more than 50% by mass.

7. The hollow particles according to any one of Claims 1 to 6, wherein a void ratio is 50% or more.

8. A method for producing the hollow particles defined by any one of Claims 1 to 7, the method comprising:

preparing a mixture liquid containing a monomer for skeleton formation, a hydrophobic solvent, a polymerization initiator, a dispersion stabilizer and an aqueous medium,

suspending the mixture liquid to prepare a suspension in which droplets of a monomer composition containing the monomer for skeleton formation, the hydrophobic solvent and the polymerization initiator are dispersed in the aqueous medium, and

preparing a precursor composition containing precursor particles by subjecting the suspension to a polymerization reaction and adding a monomer for amino group introduction, which contains a radically polymerizable group and an amino group, to further continue the polymerization reaction when a polymerization conversion rate of the monomer for skeleton formation reaches 1% by mass or more and 99% by mass or less, wherein the precursor particles comprise a shell and a hollow portion surrounded by the shell, and the precursor particles include the hydrophobic solvent in the hollow portion, and wherein the shell of the precursor particles contains a polymer of the monomer for skeleton formation and the monomer for amino group introduction, and the shell has amino groups on an outside surface thereof,

wherein a solubility of the monomer for amino group introduction in water at 20°C is larger than that of the hydrophobic solvent and is from 0.5 g/L to 1000 g/L, and

wherein the monomer for skeleton formation contains a crosslinkable monomer, and a content of the crosslinkable monomer is 60% by mass or more with respect to a total (100% by mass) of the monomer for skeleton formation and the monomer for amino group introduction.

9. A method for producing the hollow particles defined by any one of Claims 1 to 7, the method comprising:

preparing a mixture liquid containing a monomer for skeleton formation, a hydrophobic solvent, a polymerization initiator, a dispersion stabilizer and an aqueous medium,

suspending the mixture liquid to prepare a suspension in which droplets of a monomer composition containing the monomer for skeleton formation, the hydrophobic solvent and the polymerization initiator are dispersed in the aqueous medium, and

preparing a precursor composition containing precursor particles by subjecting the suspension to a polymerization reaction and adding a monomer for amino group introduction, which contains a radically polymerizable group and an amino group, to further continue the polymerization reaction when a polymerization conversion rate of the monomer for skeleton formation reaches 40% by mass or more and 99% by mass or less, wherein the precursor particles comprise a shell and a hollow portion surrounded by the shell, and the precursor particles include the hydrophobic solvent in the hollow portion, and wherein the shell of the precursor particles contains a polymer of the monomer for skeleton formation and the monomer for amino group introduction, and the shell has amino groups on an outside surface thereof,

wherein a solubility of the monomer for amino group introduction in water at 20°C is larger than that of the hydrophobic solvent and is from 0.5 g/L to 80 g/L, and

wherein the monomer for skeleton formation contains a crosslinkable monomer, and a content of the crosslinkable monomer is 60% by mass or more with respect to a total (100% by mass) of the monomer for skeleton formation and the monomer for amino group introduction.

10. A resin composition comprising the hollow particles defined by any one of Claims 1 to 7 and a binder resin containing a functional group reactive with an amino group.

11. The resin composition according to Claim 10, wherein the functional group of the binder resin is at least one selected from the group consisting of an epoxy group, a carboxy group and a carboxylic anhydride group.

[FIG. 1]

## INTERNATIONAL SEARCH REPORT

International application No.

**PCT/JP2022/045058**

### A. CLASSIFICATION OF SUBJECT MATTER

***C08F 2/18***(2006.01)i; ***B01J 13/14***(2006.01)i; ***C08F 257/00***(2006.01)i
FI:  C08F2/18; C08F257/00; B01J13/14

According to International Patent Classification (IPC) or to both national classification and IPC

### B. FIELDS SEARCHED

Minimum documentation searched (classification system followed by classification symbols)

C08F2/18; B01J13/14; C08F257/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2021/172402 A1 (ZEON CORP) 02 September 2021 (2021-09-02)<br>    entire text | 1-11 |
| A | JP 2010-105840 A (DIC CORP) 13 May 2010 (2010-05-13)<br>    entire text | 1-11 |
| A | JP 2017-525832 A (JOINSTAR BIOMEDICAL TECH CO LTD) 07 September 2017<br>(2017-09-07)<br>    entire text | 1-11 |
| A | JP 2021-54941 A (SEKISUI PLASTICS) 08 April 2021 (2021-04-08)<br>    entire text | 1-11 |

☐ Further documents are listed in the continuation of Box C.          ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/045058**

| Patent document cited in search report | | | Publication date (day/month/year) | Patent family member(s) | | | Publication date (day/month/year) |
|---|---|---|---|---|---|---|---|
| WO | 2021/172402 | A1 | 02 September 2021 | CN | 115135678 | A | |
| JP | 2010-105840 | A | 13 May 2010 | (Family: none) | | | |
| JP | 2017-525832 | A | 07 September 2017 | US | 2017/0121603 | A1 | |
| | | | | entire text | | | |
| | | | | WO | 2015/185023 | A2 | |
| | | | | EP | 3159391 | A2 | |
| | | | | CN | 105219373 | A | |
| | | | | KR | 10-2017-0117360 | A | |
| JP | 2021-54941 | A | 08 April 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019177006 A

- JP 2006089648 A

**Non-patent literature cited in the description**

- Kagaku Binran, Kiso Hen, Kaitei 4 Ban. Maruzen Publishing Co., Ltd, 30 September 1993